# EUROPÄISCHE PATENTANMELDUNG

(11) **EP 3 418 052 A1**
(43) Veröffentlichungstag der Anmeldung: **26.12.2018**
(21) Anmeldenummer: 17177723.8
(22) Anmeldetag: 23.06.2017
(51) Int. Cl.: B32B 27/40, B32B 37/24

(54) **SCHICHTPRESSSTOFFPLATTEN UND VERFAHREN ZU IHRER HERSTELLUNG**

(71) Anmelder: FunderMax GmbH, 9300 St. Veit an der Glan (AT)
(72) Erfinder: Jannach, Gerhard, 9300 St. Veit / Glan (AT)
(74) Vertreter: Vossius & Partner Patentanwälte Rechtsanwälte mbB

(57) **Zusammenfassung**

Die Erfindung betrifft eine Schichtpressstoffplatte, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält. Darüber hinaus betrifft sie ein Oberflächenmaterial für eine Schichtpressstoffplatte, sowie Verfahren zur Herstellung der Schichtpressstoffplatte und des Oberflächenmaterials.

## Beschreibung

Die Erfindung betrifft eine Schichtpressstoffplatte, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält. Darüber hinaus betrifft sie ein Oberflächenmaterial für eine solche Schichtpressstoffplatte, sowie Verfahren zur Herstellung der Schichtpressstoffplatte und des Oberflächenmaterials.

Polyurethan(meth)acrylate sind geeignete Bestandteile für Beschichtungen in vielen Anwendungsbereichen. Polyurethanacrylate als Witterungsschutz von dekorativen Oberflächen sind beispielsweise in EP 846135 beschrieben. Bei Anwendungen im Baubereich werden besonders hohe Anforderungen an die dekorativen Oberflächen gestellt. Einerseits an die mechanischen Eigenschaften wie Kratzbeständigkeit und Oberflächenhärte und andererseits an die Bewitterungseigenschaften, im speziellen Klima-, Licht- und UV-Beständigkeit. Darüber hinaus wird nicht nur eine besondere Langlebigkeit der technischen Eigenschaften zum dauerhaften Schutz des Gebäudes, sondern auch der dekorativen Eigenschaften gefordert. Darüber hinaus ist eine hohe Farbstabilität sowie eine Konstanz des Glanzgrades der Oberfläche von Vorteil.

Alternativen zur Bereitstellung von dekorativen Oberflächen mit Hilfe von strahlungsgehärteten Beschichtungen sind in EP 0166153 A1, EP 0216269 A2, EP 1122062 A2 und WO 2008/147180 beschrieben, die zu sehr kratzfesten Oberflächen führen können. Nachteile solcher Beschichtungen und der Verfahren zu ihrem Aufbringen sind die apparativ aufwändigen, teuren Anlagen sowie eine schlechte Hantierbarkeit des Dekorhalbfabrikates wegen der durch das Härtungsverfahren bedingten starken Rollneigung, die im weiteren Herstellungsprozess zu Ausschuss führt.

Zusätzlich ist aus EP 2152528 B1 ersichtlich, dass für Oberflächen mit besonders geringen Änderungen des Glanzgrades im Laufe der Bewitterung Oberflächenbeschichtungen eingesetzt wurden, für die aufwändige, mehrstufige Härtungsprozesse erforderlich sind.

Zur Einstellung des Glanzgrades werden in der Herstellung der Beschichtungen üblicherweise Additive, wie beispielsweise Mattierungsmittel verwendet. Aus EP338221 A1 ist bekannt, dass ein Mattierungsmittel eine negative Auswirkung auf die Kratzfestigkeit der Oberfläche haben kann. Als Additive, die gezielt an der Oberfläche der Beschichtung deren Struktur beeinflussen, sind sie besonders Witterungseinflüssen und UV-Licht ausgesetzt, weshalb im Laufe der Anwendung eine Änderung des Glanzgrades beobachtet werden kann.

In PCT/EP/2016/082459 wird eine polymerbeschichtete Oberflächenlage für eine Schichtpressstoffplatte (auch als HPL-Platte für "high-pressure-laminate" bezeichnet) offenbart, die hohe Kratzfestigkeit und eine ausgezeichnete Bewitterungsbeständigkeit aufweist, deren Glanzgrad sich während der Bewitterung nur geringfügig verändert, und die sich dennoch mit Hilfe eines einfachen Verfahrens ohne apparativ aufwändige ein- oder mehrstufige Strahlenhärtung herstellen und aufbringen lässt. Die Oberflächenlage ist darüber hinaus geeignet, einer Schichtpressstoffplatte Chemikalienbeständigkeit zu verleihen und gewährleistet, dass die Platte leicht von Graffitis und anderen Verschmutzungen gereinigt werden kann.

Der vorliegenden Erfindung lag die Aufgabe zugrunde, die Haftung von Poly(meth)acrylat-Polymerbeschichtungen auf variierenden Trägermaterialien, die bei der Herstellung von Schichtpressstoffplatten zum Einsatz kommen, zu optimieren, ohne dabei auf apparativ aufwändige Härtungsverfahren unter Verwendung von Strahlungshärtung zurückgreifen zu müssen. Darüber hinaus wurde eine erhöhte Flexibilität in der der Oberflächengestaltung angestrebt, ohne dabei die Beständigkeit der Polymerbeschichtung zu beeinträchtigen.

Als Lösung dieser Aufgabe wird gemäß eines ersten Aspekts der Erfindung ein Verfahren zur Herstellung einer Schichtpressstoffplatte mit einer mehrschichtigen Polymerbeschichtung an mindestens einer Plattenoberfläche bereitgestellt, das die folgenden Schritte umfasst:
a) Auftragen eines Beschichtungssystems BS-1 als Beschichtung auf ein Oberflächenmaterial für eine Schichtpressstoffplatte, wobei das Beschichtungssystem BS-1 eine Harzkomponente BSR-1 und eine Härterkomponente BSC-1 umfasst, und wobei in der Harzkomponente BSR-1 ein Polyolharz enthalten ist und in der Härterkomponente BSC-1 ein Isocyanathärter enthalten ist;
b) Vernetzen des in Schritt a) beschichteten Oberflächenmaterials bei einer erhöhten Temperatur, bei der eine Reaktion von Hydroxygruppen der Harzkomponente BSR-1 und Isocyanatgruppen der Härterkomponente BSC-1 stattfindet, so dass in der Beschichtung ein Polyurethan-Polymer gebildet wird;
c) Auftragen eines weiteren Beschichtungssystems BS-2 als Beschichtung auf die in Schritt b) bereitgestellte Beschichtung auf dem Oberflächenmaterial, wobei das Beschichtungssystem BS-2 eine Harzkomponente BSR-2 und eine Härterkomponente BSC-2 umfasst, und wobei in der Harzkomponente BSR-2 sowohl Hydroxygruppen als auch Gruppen mit einer (meth)acrylischen Doppelbindung enthalten sind, und in der Härterkomponente BSC-2 ein Isocyanathärter enthalten ist;
d) Vernetzen des in Schritt c) beschichteten Oberflächenmaterials bei einer erhöhten Temperatur, bei der eine Reaktion von Hydroxygruppen der Harzkomponente BSR-2 mit Isocyanatgruppen der Härterkomponente BSC-2 stattfindet, so dass in der Beschichtung ein Polyurethan-Polymer gebildet wird, das Gruppen mit einer (meth)acrylischen Doppelbindung aufweist;
e) Bereitstellen eines Pressstapels, der ein Material zum Bilden einer Kernlage einer Schichtpressstoffplatte, das eine oder mehrere, bevorzugt mehrere, Lagen eines mit härtbarem Kunstharz imprägnierten Trägermaterials umfasst, und der das in Schritt d) erhaltene beschichtete Oberflächenmaterial als Oberflächenlage enthält, so dass zumindest auf einer Seite des Pressstapels das in Schritt d) erhaltene beschichtete Oberflächenmaterial die äußerste Lage bildet und die vernetzte Beschichtung auf mindestens einer Oberfläche des Pressstapels vorliegt;
f) Verpressen des Pressstapels bei erhöhtem Druck und einer Temperatur oberhalb der Vernetzungstemperatur des Schritts d), so dass eine Polymerisation der (meth)acrylischen Doppelbindungen in der vernetzten Beschichtung stattfindet und eine Schichtpressstoffplatte gebildet wird, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält.

Durch Kombination einer Schicht eines Polyurethan(meth)acrylat-Polymers mit einer darunter liegenden Polyurethan-Polymerschicht können mit Hilfe des erfindungsgemäßen Verfahrens ausgezeichnete Hafteigenschaften auf Trägermaterialien für Schichtpressstoffplatten erreicht werden. Darüber hinaus kann die Polyurethan-Polymerschicht dekorative oder funktionelle Zusatzstoffe, wie dekorative oder funktionelle (z.B. farbige, leifähige, abschirmende, leuchtende, reflektierende) Pigmente aufnehmen, so dass mit Hilfe der mehrschichtigen Polymerbeschichtung das Erscheinungsbild und/oder die Funktionalität der Plattenoberfläche ohne zusätzlichen Konstruktiven Aufwand an eine Vielzahl von Anwendungen angepasst werden. Da zum Aufbringen der mehrschichtigen Polymerbeschichtung keine Strahlungshärtung notwendig ist, können auch solche Zusatzstoffe eingesetzt werden, die durch Wechselwirkung mit aktinischer Strahlung in ihrer Funktion beeinträchtigt werden könnten.

Gemäß einem weiteren Aspekt der Erfindung wird daher eine Schichtpressstoffplatte zur Verfügung gestellt, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält.

Weitere Aspekte der Erfindung bildet ein Oberflächenmaterial für eine Schichtpressstoffplatte mit einer mehrschichtigen Beschichtung auf einer Seite des Oberflächenmaterials, sowie ein Verfahren zur Herstellung eines solchen Oberflächenmaterials. Das erfindungsgemäße Verfahren zur Herstellung eines Oberflächenmaterials umfasst die Schritte a) bis d), die den vorstehend beschriebenen Schritten a) bis d) des Verfahrens zur Herstellung einer Schichtpressstoffplatte entsprechen. Das Oberflächenmaterial nicht nur als Zwischenprodukt bei der Herstellung einer Schichtpressstoffplatte auftritt, sondern seine Herstellung zeitlich und/oder räumlich getrennt von der Herstellung der Schichtpressstoffplatte erfolgen kann, werden beide Verfahren trotz dieser Übereinstimmung getrennt beansprucht.

Die erfindungsgemäße Verfahren zur Herstellung einer Schichtpressstoffplatte mit einer mehrschichtigen Polymerbeschichtung an mindestens einer Plattenoberfläche umfasst die Schritte a) bis f), die im Folgenden im Detail beschrieben werden. Wie vorstehend erläutert gelten die Angaben zu den Schritten a) bis d) dabei in gleicher Weise für das ebenfalls erfindungsgemäße Verfahren zur Herstellung eines Oberflächenmaterials für eine Schichtpressstoffplatte. Da die Herstellung einer mehrschichtigen Polymerbeschichtung unter Einsatz unterschiedlicher Beschichtungssysteme erfolgt, sind die Beschichtungssysteme sowie ihre Komponenten mit den Bezeichnungen BS-1, BS-2, BSR-1, BSR-2, BSC-1 und BSC-2 gekennzeichnet. Wie für den Leser ohne weiteres verständlich, dienen diese Bezeichnungen lediglich zur besseren Unterscheidung der jeweiligen Komponenten, und tragen nicht zur strukturellen Definition dieser Komponenten bei, die ebenfalls angegeben ist.

In Schritt a) des erfindungsgemäßen Verfahrens erfolgt das Auftragen eines Beschichtungssystems BS-1 als Beschichtung auf ein Oberflächenmaterial für eine Schichtpressstoffplatte, wobei das Beschichtungssystem BS-1 eine Harzkomponente BSR-1 und eine Härterkomponente BSC-1 umfasst, und wobei in der Harzkomponente BSR-1 ein Polyolharz enthalten ist und in der Härterkomponente BSC-1 ein Isocyanathärter enthalten ist.

Das in Schritt a) des erfindungsgemäßen Verfahrens aufgetragene Beschichtungssystem BS-1 umfasst die Harzkomponente und die Härterkomponente, und kann darüber hinaus optionale Zusatzstoffe enthalten, die nachstehend beschrieben werden. Im Unterschied zum Beschichtungssystem BS-2 ist es frei von Komponenten, die acrylische oder methacrylische Doppelbindungen (hier auch gemeinsam als (meth)acrylische Doppelbindungen bezeichnet) aufweisen.

Die Harzkomponente BSR-1 enthält ein Polyolharz. Dabei kann es sich um einen einzigen Typ eines Polyolharzes oder um ein Gemisch aus zwei oder mehr Polyolharzen handeln. Die Harzkomponente kann neben dem Polyolharz noch ein oder mehrere weitere Polymerharze enthalten. Bevorzugt ist jedoch kein weiteres Harz in der Harzkomponente BSR-1 enthalten, bei dem es sich nicht um ein Polyolharz handelt.

Bei dem Polyolharz handelt es sich um eine Harzverbindung, die zwei oder mehr freie Hydroxygruppen aufweist. Wie dem Fachmann geläufig ist, bezeichnet der Begriff Polyol dabei Verbindungen mit alkoholischen Hydroxygruppen. Bevorzugt enthält die Harzkomponente BSR-1 mindestens ein Polyolharz, das mehr als zwei freie Hydroxyruppen aufweist. Die freien Hydroxygruppen werden erfindungsgemäß mit einem Isocyanathärter zur Reaktion gebracht, um ein Polyurethan-Polymer zu bilden.

Als Beispiele für geeignete Polyolharze können Polyesterpolyole genannt werden, die linear oder verzweigt sein können. Vorzugsweise enthält die Harzkomponente BSR-1 mindestens ein verzweigtes Polyesterpolyol das mehr als zwei freie Hydroxyruppen aufweist. Das verzweigte Polyesterpolyol weist bevorzugt eine Viskosität von 300 bis 2000 mPas (23°C), stärker bevorzugt von 500 bis 1500 mPas auf. Sie kann beispielsweise mit Hilfe eines Rotationsviskosimeters bestimmt werden. Der OH-Gehalt des verzweigten Polyesterpolyols beträgt vorzugsweise 4 bis 15%, stärker bevorzugt 6 bis 12%. Wie dem Fachmann geläufig, bezieht sich die Angabe des OH-Gehalts auf die Menge an OH-Gruppen in Gew.%, bezogen auf das Gesamtgewicht des Polyolharzes. Sie wird üblicherweise mit Hilfe der Hydroxylzahl des Polyols bestimmt, d.h. der Menge an Kaliumhydroxid, welche zur Neutralisierung der Essigsäure nötig ist, die bei der Acetylierung von einem Gramm des Polyols gebunden werden kann.

Als weiteres Beispiel für einen Bestandteil der Harzkomponente BSR-1 kann eine Glycerinesterverbindung genannt werden, in der mindestens zwei, bevorzugt alle drei Hydroxgruppen des Glycerins mit einer Hydroxycarbonsäure verestert sind. Die Glycerinesterverbindung weist bevorzugt eine Viskosität von 1500 bis 8000 mPas (23°C), stärker bevorzugt eine Viskosität von 2000 bis 5000 mPas auf. Sie kann beispielsweise mit Hilfe eines Rotationsviskosimeters bestimmt werden. Der OH-Gehalt der Gylcerinesterverbindung beträgt vorzugsweise 1,5 bis 10%, stärker bevorzugt 3 bis 8%. Auch in diesem Zusammenhang bezieht sich die Angabe des OH-Gehalts auf die Menge an OH-Gruppen in Gew.%, bezogen auf das Gesamtgewicht des Gylcerinesters. Sie wird üblicherweise mit Hilfe der Hydroxylzahl des Glycerinesters bestimmt,

Gemäß einer besonders bevorzugten Ausführungsform enthält die Harzkomponente BSR-1 ein Gemisch eines verzweigten Polyesterpolyols und einer Glycerinesterverbindung, einschließlich ihrer bevorzugten Ausführungsformen, wie vorstehend beschrieben.

Die Härterkomponente BSC-1 enthält einen Isocyanathärter. Dabei kann es sich um einen einzigen Typ eines Isocyanathärters oder um eine Kombination aus zwei oder mehr Isocyanathärtern handeln. Bevorzugt besteht die Härterkomponente aus dem Isocyanathärter. Wie dem Fachmann geläufig, wird dabei als Isocyanathärter eine Verbindung bezeichnet, die zwei oder mehr Isocyanatgruppen aufweist. Bevorzugt weist der Isocyanathärter 2 bis 4 Isocyanatgruppen auf. Bei den Isocyanatgruppen kann es sich um freie Isocyanatgruppen -N=C=O handeln, oder optional um Isocyanatgruppen, die in ihrer Reaktivität bei Raumtemperatur blockiert sind (hier auch als "blockierte Isocyanatgruppen" bezeichnet). Soweit nicht anders angegeben, sind vom Begriff "Isocyanatgruppe" im Rahmen der vorliegenden Beschreibung beide Typen umfasst.

Bevorzugte Beispiele für den Isocyanathärter sind die folgenden (i) bis (iii):
(i) Ein Isocyanathärter der Formel R¹¹[-N=C=O]ₛ, wobei s 2 bis 4, bevorzugt 2 oder 3 ist, und R¹¹ eine aliphatische oder cycloaliphatische Kohlenwasserstoffgruppe ist, bevorzugt eine Alkylgruppe, die offenkettig (d.h. linear oder verzweigt) oder cyclisch sein kann, oder in der offenkettige oder verzweigte Einheiten kombiniert sein können, besonders bevorzugt eine Alkylgruppe mit 3 bis 20, stärker bevorzugt 3 bis 12 C-Atomen.
(ii) Ein Oligomer, z.B. ein Trimer, aus Isocyanaten der unter (i) angegebenen Formel. Ein bevorzugtes Beispiel für ein solches Oligomer ist das Trimer des Hexamethylendiisocyanats.
(iii) Ein Derivat der unter (i) oder (ii) genannten Isocyanate, bei dem die Isocyanatgruppen in ihrer Reaktivität bei Raumtemperatur blockiert sind. Beispiele für solche blockierten Isocyanatgruppen sind mit Dimethylpyrazol (DMP), mit Methylethylketoxim (MEK), mit epsilon-Caprolacton (e-CAP), mit Diisopropylamin (DIPA) oder mit Diethylmalonat (DEM) blockierte Isocyanatgruppen.

In einer bevorzugten Ausführungsform enthält die Härterkomponente sowohl freie als auch blockierte Isocyanatgruppen. Besonders bevorzugt enthält die Härterkomponente BSC-1 mindestens 5 % blockierte Isocyanatgruppen, ausgedrückt als die relative Anzahl der blockierten Isocyanatgruppen bezogen auf die Anzahl aller blockierten und freien Isocyanatgruppen in der Härterkomponente. Die relative Anzahl ggf. vorhandener blockierter Isocyanatgruppen, bezogen auf die Anzahl aller blockierten und freien Isocyanatgruppen in der Härterkomponente, beträgt jedoch typischerweise nicht mehr als 90 %. Eine solche Härterkomponente kann z.B. vorteilhaft durch Verwendung einer Kombination aus mindestens einem Isocyanathärter mit freien Isocyanatgruppen und mindestens einem Isocyanathärter mit blockierten Isocyanatgruppen bereitgestellt werden.

Bevorzugt liegen im Beschichtungsystem BS-1 die Harzkomponente BSR-1 und die Härterkomponente BSC-1 in einer relativen Menge vor, bei der sich ein äquivalentes Verhältnis von Hydroxygruppen in der Harzkomponente zu Isocyanatgruppen in der Härterkomponente ergibt.

Das Beschichtungssystem BS-1 kann optionale Zusatzstoffe enthalten.

Als Beispiele können hier Zusatzstoffe genannt werden, die die Verarbeitung des Beschichtungssystems erleichtern und/oder die Stabilität der Beschichtung verbessern, z.B. die für Beschichtungssystem bekannten Verlaufmittel, Entschäumer, Lichtschutzmittel oder Entgasungsmittel.

Die mit Hilfe des Beschichtungssystems BS-1 gebildete Schicht eines Polyurethan-Polymers kann aber auch auf vorteilhafte Weise dekorative oder funktionelle Zusatzstoffe enthalten, die die Oberflächeneigenschaften, beispielsweise die physikalische Funktionalität oder das Erscheinungsbild, der Schichtpressstoffplatte in gewünschter Weise beeinflussen. Als Beispiele können hier funktionelle Zusatzstoffe, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, oder Flüssigkristallpigmente, Farbpigmente, oder optische Effektpigmente wie z.B. Metallic-, Flipflop-, changierende-, oder Perlmuttpigmente, genannt werden.

Das Beschichtungssystem BS-1 umfasst bevorzugt die Harzkomponente BSR-1 und die Härterkomponente BSC-1 in einer Menge von insgesamt 50 bis 100 Gew.%, stärker bevorzugt 70 bis 100 Gew.%, besonders bevorzugt 80 bis 100 Gew.%, und optionale Zusatzstoffe in einer Menge von insgesamt 0 bis 50 Gew.%, stärker bevorzugt 0 bis 30 Gew.%, besonders bevorzugt 0 bis 20 Gew.%, bezogen auf das Gesamtgewicht des Beschichtungssystems BS-1 als 100 Gew.%.

Zum Bereitstellen des Beschichtungssystems werden die Harzkomponente und die Härterkomponente, ggf. zusammen mit den optionalen Zusatzstoffen, vermischt. Nach dem Vermischen der beiden Komponenten liegt die Gebrauchsdauer des Beschichtungssystems typischerweise im Bereich von einer bis mehreren Stunden, z.B. zwischen 1 und 3 Stunden. Das Beschichtungssystems ist typischerweise bei 25°C und Normaldruck flüssig.

Gemäß dem erfindungsgemäßen Verfahren wird das Beschichtungssystem BS-1 in Schritt a) als Beschichtung auf ein Oberflächenmaterial für eine Schichtpressstoffplatte aufgetragen. Solche Oberflächenmaterialien für Schichtpressstoffplatten sind dem Fachmann geläufig. Es handelt sich dabei generell um ein flächiges Material, d.h. ein Material, dessen Länge und Breite erheblich größer sind als seine Dicke, wie eine Folie, eine Materialbahn oder ein Bogen eines Materials.

Beispiele für geeignete Oberflächenmaterialien sind Vliese, Non-wovens oder Gewebe aus natürlichen oder synthetischen organischen oder anorganischen Fasern, insbesondere in Form von Bahnen solcher Materialien, Bahnen oder Folien aus Kunststoffen (Thermoplaste, Duroplaste, oder Elastomere), Metall, Holz, Stein, Glas, oder Verbundmaterialien. Ein bevorzugtes Beispiel für ein Oberflächenmaterial ist Papier, z.B. in Form einer Papierbahn.

Besonders bevorzugt als Oberflächenmaterial ist eine mit einem härtbaren Kunstharz imprägnierte Papierbahn. Als härtbares Kunstharz können hier Kunstharze zum Einsatz kommen, die für die Anwendung in Schichtpressstoffplatten bekannt sind, wie Phenol-Formaldehyd-Harz (PF-Harz), Melamin-Formaldehydharz (MF-Harz), Harnstoff-Formaldehyd-Harz (UF-Harz) oder Mischharze daraus, Epoxidharze, Polyesterharze, Thermoplaste oder Elastomere. Bevorzugt werden als härtbare Kunstharze Phenol-Formaldehyd-Harz (PF-Harz), Melamin-Formaldehydharz (MF-Harz), Harnstoff-Formaldehyd-Harz (UF-Harz) oder Mischharze daraus eingesetzt.

Bei dem in Schritt a) beschichteten Oberflächenmaterial handelt es sich weiter bevorzugt um eine Dekorschicht für eine Schichtpressstoffplatte, die z.B. Farbstoffe oder Pigmente aufweisen kann, besonders bevorzugt um ein mit härtbarem Kunstharz imprägniertes Dekorpapier.

Das Auftragen des Beschichtungssystems BS-1 als Beschichtung auf das Oberflächenmaterial kann mit bekannten Verfahren, z.B. mit Hilfe von Walzen, erfolgen. Die Beschichtung wird vorzugsweise so aufgetragen, dass ein geschlossener Film des Beschichtungssystems auf dem Oberflächenmaterial gebildet wird. Die aufgetragene Menge liegt vorzugsweise im Bereich von 20 bis 150 g/m², besonders bevorzugt im Bereich von 50 bis 100g/m².

In Schritt b) des erfindungsgemäßen Verfahrens erfolgt das Vernetzen des in Schritt a) beschichteten Oberflächenmaterials bei einer erhöhten Temperatur, bei der eine Reaktion von Hydroxygruppen der Harzkomponente BSR-1 und Isocyanatgruppen der Härterkomponente BSC-1 stattfindet, so dass in der Beschichtung ein Polyurethan-Polymer gebildet wird. Typischerweise findet das Vernetzen des Oberflächenmaterials bei einer Temperatur von 130 °C oder weniger, stärker bevorzugt bei einer Temperatur von 100 bis 130 °C statt. Bevorzugt werden die Temperatur und die Dauer des Vernetzungsvorgangs so gewählt, dass das beschichtete Oberflächenmaterial nach dem Durchführen des Schritts b) als grifffester und blockfreier Film vorliegt. Dabei ist es nicht unbedingt notwendig, dass alle im aufgetragenen Beschichtungssystem BS-1 für eine Reaktion zur Verfügung stehenden Hydroxygruppen bzw. Isocyanatgruppen bereits in Schritt b) zur Reaktion kommen. Bevorzugt findet in Schritt b) nur eine teilweise Reaktion der Hydroxygruppen und Isocyanatgruppen im mit dem Beschichtungssystem BS-1 beschichteten Oberflächenmaterial statt, d.h. in der in Schritt b) gebildeten Beschichtung liegen neben einem Polyurethan-Polymer bevorzugt noch Isocyanatgruppen und Hydroxygruppen vor, die in einem der Folgeschritte zusätzlich miteinander reagieren können.

Wie vorstehend erläutert beinhaltet das Bilden der Beschichtung, die in Schritt b) bereitgestellt wird, weder im Rahmen des Schritts a) noch des Schritts b) (noch als zusätzlichen Schritt) eine Strahlungshärtung von enthaltenen Komponenten. Da, wie ebenfalls vorstehend ausgeführt, das Beschichtungssystem BS-1 frei von Komponenten ist, die acrylische oder methacrylische Doppelbindungen aufweisen, ist auch das in Schritt b) gebildete Polyurethan-Polymer frei von solchen Doppelbindungen.

Im Rahmen des erfindungsgemäßen Verfahrens kann die Kombination der Schritte a) und b) genau einmal durchgeführt werden, bevor anschließend Schritt c) durchgeführt wird. In diesem Fall wird auf dem Oberflächenmaterial für eine Schichtpressstoffplatte eine Beschichtung gebildet, die zwei Schichten aufweist: die nach Durchführung der Schritte a) und b) bereitgestellte Beschichtung, die ein Polyurethan-Polymer enthält, sowie die in den Folgeschritten c) und d) darauf aufgebrachte Beschichtung.

Es ist allerdings auch möglich, die Kombination der Schritte a) und b) in dieser Reihenfolge mindestens zweimal, z.B. zwei oder dreimal, durchzuführen, bevor anschließend Schritt c) durchgeführt wird. In diesem Fall wird auf dem Oberflächenmaterial für eine Schichtpressstoffplatte eine Beschichtung gebildet, die mehr als zwei Schichten aufweist: durch jedes Durchführen der Schritte a) und b) wird eine Schicht gebildet, die ein Polyurethan-Polymer enthält, auf die in den Folgeschritten c) und d) eine weitere Beschichtung aufgebracht wird. Wird die Kombination der Schritte a) und b) mehrfach durchgeführt, so wird definitionsgemäß bei jeder Durchführung ein Beschichtungssystem BS-1 zum Einsatz kommen. Die Zusammensetzung des Beschichtungssystems kann jedoch von Schicht zu Schicht variieren, z.B. in Bezug auf die Anwesenheit oder die Auswahl von dekorativen oder funktionellen Zusatzstoffen.

In Schritt c) des erfindungsgemäßen Verfahrens erfolgt das Auftragen eines weiteren Beschichtungssystems, als BS-2 bezeichnet, als Beschichtung auf die in Schritt b) bereitgestellte Beschichtung auf dem Oberflächenmaterial, wobei das Beschichtungssystem BS-2 eine Harzkomponente BSR-2 und eine Härterkomponente BSC-2 umfasst, und wobei in der Harzkomponente BSR-2 sowohl Hydroxygruppen als auch Gruppen mit einer (meth)acrylischen Doppelbindung enthalten sind, und in der Härterkomponente BSC-2 ein Isocyanathärter enthalten ist.

Um eine mehrschichtige Polymerbeschichtung zu bilden, wird das Beschichtungssystem BS-2 auf die in Schritt b) erzeugte Beschichtung aufgebracht, die, wie vorstehend beschrieben, einschichtig oder selbst bereits mehrschichtig sein kann. Vorzugsweise erfolgt das Auftragen so, dass die in Schritt b) erzeugte Beschichtung im wesentlichen vom Beschichtungssystem BS-2 bedeckt ist, besonders bevorzugt so, dass sie vollständig vom Beschichtungssystem BS-2 bedeckt ist,

Das in Schritt c) des erfindungsgemäßen Verfahrens aufgetragene Beschichtungssystem BS-2 umfasst die Harzkomponente BSR-2 und die Härterkomponente BSC-2, und kann darüber hinaus optionale Zusatzstoffe enthalten, die nachstehend beschrieben werden. Strukturell unterscheidet sich das Beschichtungssystem BS-2 vom Beschichtungssystem BS-1 zumindest insoweit, als das Beschichtungssystem BS-2 eine Komponente enthält, die acrylische oder methacrylische Doppelbindungen (hier auch gemeinsam als (meth)acrylische Doppelbindungen bezeichnet) aufweist.

Um sowohl Hydroxygruppen als auch Gruppen mit einer (meth)acrylischen Doppelbindung bereitzustellen, enthält die Harzkomponente BSR-2 bevorzugt ein Polyolharz in Kombination mit einer Polyolverbindung, die neben Hydroxygruppen auch Gruppen mit einer (meth)acrylischen Doppelbindung aufweist.

Als Polyolharz wird bevorzugt ein Polyurethan-Präpolymer eingesetzt, das pro Molekül mindestens 2 Hydroxygruppen und keine Isocyanatgruppen aufweist. Wie für den Fachmann ersichtlich, handelt es sich bei den Hydroxygruppen in der Harzkomponente BSR-2 generell um alkoholische Hydroxygruppen. Das bevorzugt eingesetzte Polyurethan-Präpolymer kann linear order verzweigt sein. Es wird vorzugsweise gebildet aus einem Polyisocyanat mit 2 bis 4, bevorzugt 2 Isocyanatgruppen und einem Polyalkohol mit 2 bis 4, vorzugsweise 2 oder 3 alkoholischen Hydroxygruppen. Bei dem Polyisocyanat und dem Polyalkohol handelt es sich bevorzugt um aliphatische Verbindungen. Die Anzahl der Untereinheiten im Polyurethan-Präpolymer, die aus dem Polyisocyanat gebildet werden, und die Anzahl der Untereinheiten, die aus dem Polyalkohol gebildet werden, beträgt vorzugsweise jeweils 2 bis 20, bevorzugt 2 bis 9. Die Anzahl der Hydroxygruppen pro Molekül des Polyurethan-Präpolymers beträgt bevorzugt 2 bis 9, besonders bevorzugt 2 bis 5.

Darüber hinaus ist in der Harzkomponente BSR-2 bevorzugt eine Polyolverbindung enthalten, die neben Hydroxygruppen auch eine oder mehrere Gruppen mit einer (meth)acrylischen Doppelbindung aufweist. Bevorzugt sind die Gruppen mit einer (meth)acrylischen Doppelbindung Acrylestergruppen. Die Zahl der Gruppen mit einer (meth)acrylischen Doppelbindung, bevorzugt Acrylestergruppen, pro Molekül der Polyolverbindung beträgt bevorzugt mindestens 2, stärker bevorzugt 2 bis 9, besonders bevorzugt 2 bis 4. Darüber hinaus enthält die Polyolverbindung mindestens 2 Hydroxygruppen, bevorzugt 2 bis 5, besonders bevorzugt 2. Bei den Hydroxygruppen handelt es sich in der Regel um alkoholische Hydroxygruppen.

Als optionalen Bestandteil enthält die Harzkomponente BSR-2 darüber hinaus ein Lösungsmittel.

Besonders bevorzugt enthält die Harzkomponente BSR-2 ein Gemisch aus den Komponenten A bis D, in dem:
Komponente A eine polymerisierbare (Meth)acrylatverbindung ist, die pro Molekül mindestens 2 Gruppen mit einer (meth)acrylischen Doppelbindung und keine Hydroxygruppen aufweist;
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
Komponente C ein Polyurethan-Präpolymer ist, das pro Molekül mindestens 2 Hydroxygruppen und keine Isocyanatgruppen aufweist; und
Komponente D ein Harz mit einem Aminoplast-Grundgerüst ist, das pro Molekül mindestens 2 Hydroxygruppen aufweist.

In dieser bevorzugten Ausführungsform stellt die Komponente C ein in der Harzkomponente BSR-2 enthaltenes Polyolharz dar, und die Komponente B stellt eine in der Harzkomponente BSR-2 enthaltene Polyolverbindung dar, die neben Hydroxygruppen auch Gruppen mit einer (meth)acrylischen Doppelbindung aufweist.

Diese besonders bevorzugte Harzkomponente kann neben den Komponenten A bis D noch weitere Monomer- oder Polymerbestandteile und/oder Lösungsmittel enthalten. Vorzugsweise besteht die Harzkomponente aus den Komponenten A bis D und dem optionalen Lösungsmittel.

### Komponente A

Bei der Komponente A handelt es sich um eine polymerisierbare (Meth)acrylatverbindung, die pro Molekül mindestens 2 Gruppen mit einer (meth)acrylischen Doppelbindung und keine Hydroxygruppen aufweist. Die Komponente A kann von einem einzelnen Typ einer solchen polymerisierbaren (Meth)acrylatverbindung gebildet werden, oder sie kann mehrere unterschiedliche Typen solcher Verbindungen enthalten.

Wie dem Fachmann geläufig ist, wird der Ausdruck "(Meth)acryl" bzw. (Meth)acrylat" als Kurzschreibweise für Methacryl oder Acryl bzw. Methacrylat oder Acrylat verwendet. Daher umfasst der Begriff "(Meth)acrylatverbindung" als Sammelbezeichnung sowohl Verbindungen mit Acrylestergruppen CH₂=CH-C(O)-O- als Gruppen mit einer (meth)acrylischen Doppelbindung als auch Verbindungen mit Methacrylestergruppen CH₂=CCH₃-C(O)-O- als Gruppen mit einer (meth)acrylischen Doppelbindung. Bevorzugt sind die Gruppen mit einer (meth)acrylischen Doppelbindung der Verbindungen der Komponente A Acrylestergruppen.

Die Zahl der Gruppen mit einer (meth)acrylischen Doppelbindung, bevorzugt Acrylestergruppen, pro Molekül beträgt mindestens 2, bevorzugt 2 bis 18, besonders bevorzugt 2 bis 10, und insbesondere bevorzugt 4 bis 8.

Darüber hinaus enthalten die Verbindungen der Komponente A in Abgrenzung zu den Verbindungen der nachstehend definierten Komponente B keine Hydroxygruppen. Bevorzugt sind die Verbindungen der Komponente A darüber hinaus frei von -SH und -NH₂ Gruppen. Besonders bevorzugt als Verbindungen der Komponente A sind solche Verbindungen, die neben den mindestens 2 Gruppen mit einer (meth)acrylischen Doppelbindung keine weiteren reaktiven Gruppen aufweisen. Wie für den Fachmann leicht erkennbar ist, bezieht sich der Begriff der "reaktiven Gruppe" dabei auf mögliche Reaktionen zwischen Bestandteilen des Beschichtungssystems, d.h. in diesen besonders bevorzugten Verbindungen der Komponente A sind die mindestens 2 Gruppen mit einer (meth)acrylischen Doppelbindung, bevorzugt mindestens 2 Acrylestergruppen, die einzigen Gruppen, die dazu in der Lage sind, mit anderen Bestandteilen des Beschichtungssystems unter Ausbildung einer kovalenten Bindung zu reagieren. Wie für den Fachmann ebenfalls verständlich ist, gilt dies insbesondere unter den Bedingungen, denen das Beschichtungssystem BS-2 im Lauf des erfindungsgemäßen Verfahrens ausgesetzt ist (d.h. insbesondere beim Auftragen in Schritt c), Vernetzen in Schritt d), Bilden eines Pressstapels in Schritt e) und Verpressen des Pressstapels in Schritt f)).

Bevorzugt umfasst die Komponente A Verbindungen ausgewählt aus den Formeln (A1) und (A2), stärker bevorzugt ein Gemisch der Verbindungen der Formel (A1) und (A2). Besonders bevorzugt besteht die Komponente A aus Verbindungen der Formeln (A1) und (A2).

[H₂C=CH-C(O)-O-]ₘR¹-O-C(O)-NH-R²-NH-C(O)-O-R³[-O-C(O)-CH=CH₂]ₙ (A1);

worin R¹ und R³ unabhängig voneinander ausgewählt sind aus einer aliphatischen Kohlenwasserstoffgruppe, einer aliphatischen Polyethergruppe und einer aliphatischen Polyestergruppe, R² eine aliphatische oder cycloaliphatische Kohlenwasserstoffgruppe ist, n = 2-9, bevorzugt 2-4 und m = 2-9, bevorzugt 2-4 ist. Wie sich aus der Formel erkennen lässt, sind dabei m Acrylestergruppen H₂C=CH-C(O)-O- jeweils über eine Esterbindung an die Gruppe R¹ und n Acrylestergruppen an die Gruppe R³ gebunden.

Vorzugsweise sind R¹ und R³ unabhängig voneinander ausgewählt aus linearen oder verzweigten, bevorzugt verzweigten, Alkylgruppen, besonders bevorzugt aus Alkylgruppen mit 3 bis 10, stärker bevorzugt 3 bis 6 C-Atomen. R² ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen.

Soweit nicht anders angegeben, beschränken sich die Begriffe "Alkyl" oder "Alkylgruppe" im Rahmen dieser Beschreibung nicht auf einwertige gesättigte Kohlenwasserstoffgruppen, sondern können, wie aus dem jeweiligen Kontext ersichtlich, auch Gruppen mit einer höheren Anzahl an Valenzen umfassen. Wie sich z.B. aus Formel (A1) ergibt, stellt z.B. R¹ in seiner bevorzugten Form als Alkylrest in Formel (A1) m+1 Valenzen zur Anbindung an Nachbargruppen bereit. Dies gilt entsprechend auch für andere Bestandteile des Beschichtungssystems.

[H₂C=CH-C(O)-O-]ₒR⁴ (A2)

worin R⁴ eine aliphatische Kohlenwasserstoffgruppe ist, und o = 2-6, bevorzugt 3-5 ist. Vorzugsweise ist R⁴ eine lineare oder verzweigte, bevorzugt verzweigte, Alkylgruppe, besonders bevorzugt eine Alkylgruppe mit 3 bis 10, stärker bevorzugt 3 bis 6 C-Atomen.

### Komponente B

Bei der Komponente B handelt es sich um eine polymerisierbare (Meth)acrylatverbindung, die pro Molekül sowohl eine oder mehrere Gruppen mit einer (meth)acrylischen Doppelbindung als auch mindestens 2 Hydroxygruppen aufweist. Die Komponente B kann von einem einzelnen Typ einer solchen polymerisierbaren (Meth)acrylatverbindung gebildet werden, oder sie kann mehrere unterschiedliche Typen solcher Verbindungen enthalten.

Bevorzugt sind die Gruppen mit einer (meth)acrylischen Doppelbindung der Verbindungen der Komponente B Acrylestergruppen.

Die Zahl der Gruppen mit einer (meth)acrylischen Doppelbindung, bevorzugt Acrylestergruppen, pro Molekül beträgt mindestens 2, bevorzugt 2 bis 9, besonders bevorzugt 2 bis 4. Darüber hinaus enthalten die Verbindungen der Komponente B mindestens 2 Hydroxygruppen, bevorzugt 2 bis 5, besonders bevorzugt 2. Bei den Hydroxygruppen handelt es sich in der Regel um alkoholische Hydroxygruppen.

Bevorzugt umfasst Komponente B Verbindungen der Formel (B1), und besonders bevorzugt besteht sie aus Verbindungen der Formel (B1):

[H₂C=CH-C(O)-O-]ₚR⁵-O-C(O)-NH-R⁶-NH-C(O)-O-R⁷(OH)₂ (B1)

worin R⁵ ausgewählt ist aus einer aliphatischen Kohlenwasserstoffgruppe, einer alphatischen Polyethergruppe oder einer aliphatischen Polyestergruppe, R⁶ und R⁷ unabhängig voneinander ein aliphatischer oder cycloaliphatischer Kohlenwasserstoffrest sind und p = 2-9, bevorzugt 2-4 ist. Wie sich aus der Formel erkennen lässt, sind dabei p Acrylestergruppen H₂C=CH-C(O)-O- jeweils über eine Esterbindung an die Gruppe R⁵ und 2 Hydroxygruppen an die Gruppe R⁷ gebunden.

Vorzugsweise ist R⁵ eine lineare oder verzweigte, bevorzugt verzweigte, Alkylgruppe, besonders bevorzugt eine Alkylgruppe mit 3 bis 10, stärker bevorzugt 3 bis 6 C-Atomen. R⁶ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen. R⁷ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine lineare oder verzweigte Alkylgruppe mit 3 bis 20, stärker bevorzugt 3 bis 10 C-Atomen.

### Komponente C

Die Komponente C ist ein Polyurethan-Präpolymer, das pro Molekül mindestens 2 Hydroxygruppen und keine Isocyanatgruppen aufweist. Wie für den Fachmann ersichtlich, handelt es sich bei den Hydroxygruppen generell um alkoholische Hydroxygruppen. Das Polyurethan-Präpolymer kann linear order verzweigt sein. Es wird vorzugsweise gebildet aus einem Polyisocyanat mit 2 bis 4, bevorzugt 2 Isocyanatgruppen und einem Polyalkohol mit 2 bis 4, vorzugsweise 2 oder 3 alkoholischen Hydroxygruppen. Bei dem Polyisocyanat und dem Polyalkohol handelt es sich bevorzugt um aliphatische Verbindungen. Die Anzahl der Untereinheiten im Polyurethan-Präpolymer, die aus dem Polyisocyanat gebildet werden, und die Anzahl der Untereinheiten, die aus dem Polyalkohol gebildet werden, beträgt vorzugsweise jeweils 2 bis 20, bevorzugt 2 bis 9. Die Anzahl der Hydroxygruppen pro Molekül des Polyurethan-Präpolymers beträgt bevorzugt 2 bis 9, besonders bevorzugt 2 bis 5.

Das Polyurethan-Präpolymer der Komponente C enthält keine Isocyanatgruppen. Bevorzugt als Komponente C sind solche Polyurethan-Präpolymere, die neben den mindestens 2 Hydroxygruppen keine weiteren reaktiven Gruppen aufweisen. Wie für den Fachmann leicht erkennbar ist, bezieht sich der Begriff der "reaktiven Gruppe" dabei auf mögliche Reaktionen zwischen Bestandteilen des Beschichtungssystems, d.h. in diesen bevorzugten Polyurethan-Präpolymeren der Komponente C sind die mindestens 2 Hydroxygruppen die einzigen Gruppen, die dazu in der Lage sind, mit anderen Bestandteilen des Beschichtungssystems unter Ausbildung einer kovalenten Bindung zu reagieren. Wie für den Fachmann ebenfalls verständlich ist, gilt dies insbesondere unter den Bedingungen, denen das Beschichtungssystem im Laufe des erfindungsgemäßen Verfahrens ausgesetzt ist (d.h. insbesondere. beim Auftragen in Schritt c), Vernetzen in Schritt d), Bilden eines Pressstapels in Schritt e) und Verpressen des Pressstapels in Schritt f)).

Bevorzugt umfasst die Komponente C Polyurethan-Präpolymere ausgewählt aus den Formeln (C1) und (C2), d.h. die Komponente C umfasst eine Verbindung der Formel (C1) und/oder eine Verbindung der Formel (C2). Besonders bevorzugt besteht die Komponente C aus Polyurethan-Präpolymeren ausgewählt aus den Verbindungen der Formeln (C1) und (C2). Kombinationen aus Verbindungen (C1) und (C2) sind bevorzugt. 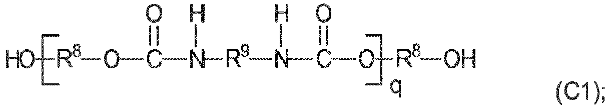 worin R⁸ unabhängig voneinander bei jedem Auftreten ausgewählt ist aus einer aliphatischen Kohlenwasserstoffgruppe, die mit einer oder mehreren Hydroxylgruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist.

Es ist bevorzugt, dass alle Gruppen R⁸ gleich sind und alle Gruppen R⁹ gleich sind.

Vorzugsweise ist R⁸ eine lineare oder verzweigte, bevorzugt verzweigte, Alkylgruppe, besonders bevorzugt eine Alkylgruppe mit 3 bis 10, stärker bevorzugt 3 bis 6 C-Atomen. Auch die Alkylgruppe R⁸ kann mit einer oder mehreren Hydroxylgruppen substituiert sein. Bevorzugt liegen 0, 1 oder 2 solcher Hydroxysubstituenten vor. R⁹ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen. 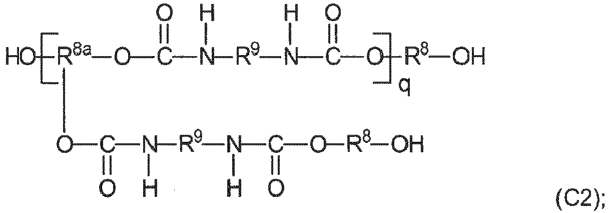 worin R⁸ und R^{8a} unabhängig voneinander bei jedem Auftreten ausgewählt sind aus einer aliphatischen Kohlenwasserstoffgruppe, die mit einer oder mehreren OH-Gruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist.

Für Formel (C2) ist bevorzugt, dass alle Gruppen R⁸ und R^{8a} gleich sind und alle Gruppen R⁹ gleich sind.

Vorzugsweise ist R⁸ und R^{8a} jeweils eine lineare oder verzweigte, bevorzugt verzweigte, Alkylgruppe, besonders bevorzugt eine Alkylgruppe mit 3 bis 10, stärker bevorzugt 3 bis 6 C-Atomen. Auch die Alkylgruppen R⁸ und R^{8a} können mit einer oder mehreren Hydroxylgruppen substituiert sein. Bevorzugt liegen in R⁸ 1 oder 2 Hydroxysubstituenten vor, und in R^{8a} 0 oder 1 Hydroxysubstituent. R⁹ ist vorzugsweise eine Alkylgruppe die offenkettig (d.h. linear oder verzweigt) oder cyclisch sein kann oder in der offenkettige oder verzweigte Einheiten kombiniert sein können, besonders bevorzugt eine Alkylgruppe mit 3 bis 20, stärker bevorzugt 6 bis 12 C-Atomen.

### Komponente D

Bei der Komponente D handelt es sich um ein Harz mit einem Aminoplast-Grundgerüst das pro Molekül mindestens 2 Hydroxygruppen aufweist. Wie für den Fachmann ersichtlich, handelt es sich bei den Hydroxygruppen generell um alkoholische Hydroxygruppen. Das Grundgerüst des Harzes der Komponente D kann auch Gruppen tragen, die durch Reaktion von Hydroxygruppen gebildet sind, z.B. Estergruppen oder Urethangruppen. Bevorzugt liegen pro Molekül 2 bis 30, stärker bevorzugt 10 bis 30 Hydroxygruppen vor.

Bei dem Harz mit einem Aminoplast-Grundgerüst handelt es sich bevorzugt um ein ausgehärtetes Harz in Form eines Pulvers. Das mittlere Molekulargewicht (Mn) des Harzes der Komponente D liegt bevorzugt zwischen 1000 g/mol und 1.000.000 g/mol.

Das Harz mit einem Aminoplast-Grundgerüst ist vorzugsweise ein Harz mit einem Harnstoff-Formaldehyd-Harz-Grundgerüst, das durch Polymerisation (insbesondere Polykondensation) von Formaldehyd und Harnstoff erhältlich ist, stärker bevorzugt ein ausgehärtetes Harz in Form eines Pulvers mit einem Harnstoff-Formaldehyd-Harz-Grundgerüst.

Wie vorstehend erläutert, enthält die Harzkomponente BSR-2, bevorzugt in Form eines Gemischs der Komponenten A, B, C und D, als optionalen Bestandteil ein Lösungsmittel.

Als beispielhafte Lösungsmittel können die folgenden genannt werden: Ester wie Ethylacetat, Butylacetat, 2-Butoxyethylacetat, aliphatische, cycloaliphatische und aromatische Kohlenwasserstoffe, Alkohole, Glycole, Glycolether oder Ketone.

Wird gemäß der bevorzugten Ausführungsform ein Gemisch der Komponenten A, B, C und D eingesetzt, so kann die Konzentration der Komponenten A bis D im Lösungsmittel beispielsweise 65 Gew.% bis 95 Gew.%, bezogen auf das Gesamtgewicht der Lösung, betragen.

Zur Herstellung der Harzkomponente BSR-2 des Beschichtungssystems BS-2 können die Komponenten, vorzugsweise die Komponenten A bis D, bereitgestellt und vermischt werden. Alternativ können z.B. insbesondere zur Bereitstellung der Komponenten A (wie z.B. die Verbindung der Formel (A1), B und C auch Ausgangsprodukte wie Polyole, Polyisocyanate, und/oder gemischt-funktionelle Verbindungen, wie ein Polyacrylat mit einer oder mehreren Hydroxylgruppen gemischt werden, aus denen die Komponenten A, B und C im Rahmen einer Synthese der Harzkomponente hergestellt werden. Beispielsweise kann die Harzkomponente durch eine ein- oder mehrstufige Synthese bei Temperaturen von 30 bis 130°C hergestellt werden. Vorzugsweise ist bei der Synthese der Harzkomponente das Harz mit Aminoplast-Grundgerüst als Komponente D von Beginn der Synthese an eingemischt.

Vorzugsweise wird bei der Herstellung der Harzkomponente nach Zugabe des Harzes mit Aminoplastgrundgerüst D thermisch auf eine Temperatur von 30 bis 130°C erhitzt.

Enthält die Harzkomponente BSR-2 ein Gemisch der Komponenten A, B, C und D, so liegt die Komponente A bevorzugt in einer Menge von 40,0 bis 80,0 Gew.%, die Komponente B in einer Menge von 19,0 bis 55,0 Gew.%, die Komponente C in einer Menge von 0,5 bis 5,0 Gew.% und die Komponente D in einer Menge von 0,5 bis 7,0 Gew.%, bezogen auf das Gesamtgewicht der Komponenten A bis D als 100 Gew.%, vor. In einer stärker bevorzugten Ausführungsform enthält die Harzkomponente die Komponente der Formel (A1) in einer Menge von 15,0 bis 45,0 Gew.%, die Komponente der Formel (A2) in einer Menge von 15,0 bis 45,0 Gew.% (wobei die Gesamtmenge von (A1) und (A2) 40,0 bis 80,0 Gew.% beträgt), die Komponente der Formel (B1) in einer Menge von 19,0 bis 55,0 Gew.%, die Komponenten (C1) und (C2) in einer Gesamtmenge von 0,5 bis 5,0 Gew.% und die Komponente D in einer Menge von 0,5 bis 7,0 Gew.%. Die Summe der Komponenten beträgt dabei wiederum 100 Gew.%.

In einer noch stärker bevorzugten Ausführungsform enthält die Harzkomponente die Komponente der Formel (A1) in einer Menge von 20,0 bis 40,0 Gew.%, die Komponente der Formel (A2) in einer Menge von 20,0 bis 40,0 Gew.% (wobei die Gesamtmenge von (A1) und (A2) 40,0 bis 80,0 Gew.% beträgt), die Komponente der Formel (B1) in einer Menge von 25,0 bis 47,0 Gew.%, die Komponenten (C1) und (C2) in einer Gesamtmenge von 0,6 bis 3,0 Gew.% und die Komponente D in einer Menge von 1,0 bis 5,0 Gew.%. Die Summe der Komponenten beträgt dabei wiederum 100 Gew.% .

In einer besonders stark bevorzugten Ausführungsform enthält die Harzkomponente die Komponente der Formel (A1) in einer Menge von 25,0 bis 35,0 Gew.%, die Komponente der Formel (A2) in einer Menge von 25,0 bis 35,0 Gew.% (wobei die Gesamtmenge von (A1) und (A2) 50,0 bis 70,0 Gew.% beträgt), die Komponente der Formel (B1) in einer Menge von 30,0 bis 42,0 Gew.%, die Komponenten (C1) und (C2) in einer Gesamtmenge von 0,8 bis 2,0 Gew.% und die Komponente D in einer Menge von 2,0 bis 4,5 Gew.%. Die Summe der Komponenten beträgt dabei wiederum 100 Gew.%.

Neben der Harzkomponente BSR-2 enthält das Beschichtungssystem BS-2 eine Härterkomponente BSC-2, in der ein Isocyanathärter enthalten ist. Dabei kann es sich um einen einzigen Typ eines Isocyanathärters oder um ein Gemisch aus zwei oder mehr Isocyanathärtern handeln. Bevorzugt besteht die Härterkomponente aus dem Isocyanathärter. Wie dem Fachmann geläufig, wird dabei als Isocyanathärter eine Verbindung bezeichnet, die zwei oder mehr Isocyanatgruppen aufweist. Bevorzugt weist der Isocyanathärter 2 bis 4 Isocyanatgruppen auf. Bei den Isocyanatgruppen kann es sich um freie Isocyanatgruppen -N=C=O handeln, oder optional um Isocyanatgruppen, die in ihrer Reaktivität bei Raumtemperatur blockiert sind (hier auch als "blockierte Isocyanatgruppen" bezeichnet). Soweit nicht anders angegeben, sind vom Begriff "Isocyanatgruppe" im Rahmen der vorliegenden Beschreibung beide Typen umfasst.

Bevorzugte Beispiele für den Isocyanathärter der Härterkomponente BSC-2 sind die folgenden (i) bis (iii):
(i) Ein Isocyanathärter der Formel R¹¹[-N=C=O]ₛ wobei s 2 bis 4, bevorzugt 2 oder 3 ist, und R¹¹ eine aliphatische oder cycloaliphatische Kohlenwasserstoffgruppe ist, bevorzugt eine Alkylgruppe, die offenkettig (d.h. linear oder verzweigt) oder cyclisch sein kann, oder in der offenkettige oder verzweigte Einheiten kombiniert sein können, besonders bevorzugt eine Alkylgruppe mit 3 bis 20, stärker bevorzugt 3 bis 12 C-Atomen.
(ii) Ein Oligomer, z.B. ein Trimer, aus Isocyanaten der unter (i) angegebenen Formel. Ein bevorzugtes Beispiel für ein solches Oligomer ist das Trimer des Hexamethylendiisocyanats.
(iii) Ein Derivat der unter (i) oder (ii) genannten Isocyanate, bei dem die Isocyanatgruppen in ihrer Reaktivität bei Raumtemperatur blockiert sind.

Unter den genannten Optionen sind (i) und (ii) besonders bevorzugt.

Bevorzugt wird die Härterkomponente in einer Menge eingesetzt, bei der ein Überschuss der Isocyanatgruppen in der Härterkomponente gegenüber den Hydroxygruppen in der Harzkomponente vorliegt.

Das Mengenverhältnis zwischen Harzkomponente und Härterkomponente im Beschichtungssystem (bevorzugt als Verhältnis der Gewichtsteile der Komponenten A+B+C+D zu Gewichtsteilen Isocyanathärter) liegt vorzugsweise im Bereich von 100/20 bis 100/40, besonders bevorzugt 100/25 bis 100/31.

Zum Bereitstellen des Beschichtungssystems BS-2 werden die Harzkomponente BSR-2 und die Härterkomponente BSC-2, ggf. zusammen mit den optionalen Zusatzstoffen, vermischt. Nach Vermischen der beiden Komponenten liegt die Gebrauchsdauer des Beschichtungssystems typischerweise im Bereich von einer bis mehreren Stunden, z.B. zwischen 1 und 3 Stunden.

Optionale Zusatzstoffe, die dem Beschichtungssystem BS-2 zugegeben werden können, sind dem Fachmann bekannt. Beispiele, die einzeln oder als Kombination verwendet werden können, sind Inhibitoren zur Verhinderung einer frühzeitigen Polymerisation der (meth)acrylischen Doppelbindungen, Katalysatoren, Polymerisationsstarter, Lichtschutzmittel, Füllstoffe, Farbstoffe, Pigmente, Additive zur Beeinflussung des Glanzgrades, Lösungsvermittler, Flammschutzmittel, UV-Absorber und Additive zur Verbesserung der Leitfähigkeit.

Vorzugsweise enthält das Beschichtungssystem BS-2 als Zusatzstoffe einen oder mehrere Polymerisationsstarter, d.h. eine Verbindung, die bei Erhitzen, z.B. bei Erhitzen auf Temperaturen von 130 °C oder mehr, Radikale bildet. Ein Beispiel für einen geeigneten Polymerisationsstarter ist tert. Butylperbenzoat.

Die Menge der Zusatzstoffe kann vom Fachmann geeignet gewählt werden. Bevorzugt besteht das Beschichtungssystem BS-2 aus der Harzkomponente BSR-2 und der Härterkomponente BSC-2 in einer Menge von insgesamt mindestens 90 Gew.%, und den optionalen Zusatzstoffen in einer Menge von höchstens 10 Gew.%, bezogen auf das Gesamtgewicht des Beschichtungssystem als 100 Gew.%. Die Mengenangaben beziehen sich dabei jeweils auf den Feststoffgehalt, d.h. gegebenenfalls vorhandene Lösungsmittel werden nicht einbezogen.

Das Beschichtungssystem ist typischerweise bei 25°C und Normaldruck flüssig und weist beispielsweise eine Viskosität von 500 bis 3000 mPas auf.

Das Auftragen des Beschichtungssystems BS-2 als Beschichtung in Schritt c) des erfindungsgemäßen Verfahrens auf die in Schritt b) bereit gestellte Beschichtung auf dem Oberflächenmaterial kann mit bekannten Verfahren, z.B. mit Hilfe von Walzen, erfolgen. Die Beschichtung wird vorzugsweise so aufgetragen, dass ein geschlossener Film des Beschichtungssystems auf dem Oberflächenmaterial gebildet wird. Die aufgetragene Menge liegt vorzugsweise im Bereich von 20 bis 150 g/m^{2,} besonders bevorzugt im Bereich von 50 bis 100 g/m².

Nach dem Auftragen des Beschichtungssystems erfolgt in einem nächsten Schritt d) das Vernetzen des beschichteten Oberflächenmaterials.

Das Vernetzen erfolgt bei einer erhöhten Temperatur, bei der eine Reaktion von Hydroxygruppen in der Harzkomponente BSR-2 mit Isocyanatgruppen der Härterkomponente BSC-2 im Beschichtungssystem BS-2 stattfindet, so dass sich in der Beschichtung ein Polyurethan-Polymer bildet, das Gruppen mit einer (meth)acrylischen Doppelbindung aufweist. Typischerweise kommt es durch das Vernetzen zu einem Übergang des Beschichtungssystems von einem flüssigen Zustand in einen Zustand, in dem es bei Handhabung des Oberflächenmaterials nicht mehr fließfähig ist. Allfällig vorhandenes Lösemittel wird bei diesem Schritt ganz oder teilweise entfernt. Komponenten des Beschichtungssystems, die keine funktionellen Gruppen aufweisen, welche mit der Härterkomponente reagieren können, sind nicht an der Vernetzungsreaktion beteiligt. Typischerweise wird das Vernetzen bei einer Temperatur von 130 °C oder weniger, bevorzugt in einem Temperaturbereich von 100 bis 130 °C durchgeführt. Bei diesen Temperaturen ist gewährleistet, dass die Reaktion mit der Härterkomponente mit ausreichender Geschwindigkeit abläuft, während die (meth)acrylischen Doppelbindungen noch nicht polymerisiert werden. Unterstützend kann dem Beschichtungssystem BS-2 ein Inhibitor zugegeben werden, der die Polymerisation der (meth)acrylischen Doppelbindungen während dem Schritt des Vernetzens verhindert.

Vorteilhafterweise weist das Oberflächenmaterial nach dem Schritt des Vernetzens eine Beschichtung auf, welche grifffest und blockfrei ist. Ein derart beschichtetes Oberflächenmaterial kann problemlos, z.B. ohne unerwünschtes Einrollen, mit anderen Schichten zu einem Pressstapel verschlichtet werden.

Nach dem Vernetzen des Oberflächenmaterials in Schritt d) kann daher das erfindungsgemäße Verfahren zur Herstellung eines Oberflächenmaterials für eine Schichtpressstoffplatte abgeschlossen werden.

Gemäß dem erfindungsgemäßen Verfahren zur Herstellung einer Schichtpressstoffplatte wird im weiteren Schritt e) ein Pressstapel bereitgestellt, der ein Material zum Bilden einer Kernlage einer Schichtpressstoffplatte und das in Schritt d) erhaltene beschichtete Oberflächenmaterial als Oberflächenlage enthält. Zumindest auf einer Seite des Pressstapels, optional auf beiden Seiten, bildet das vernetzte, beschichtete Oberflächenmaterial die äußerste Lage des Pressstapels, und die vernetzte Beschichtung liegt auf mindestens einer Oberfläche, optional auf beiden Oberflächen, des Pressstapels vor.

Das Material zum Bilden einer Kernlage einer Schichtpressstoffplatte umfasst eine oder mehrere, bevorzugt mehrere, Lagen eines mit härtbarem Kunstharz imprägnierten Trägermaterials. Geeignete Trägermaterialien sind dem Fachmann geläufig. Es handelt sich dabei generell um ein flächiges Trägermaterial, d.h. ein Material, dessen Länge und Breite erheblich größer sind als seine Dicke, wie eine Folie, eine Materialbahn oder ein Bogen eines Materials. Die Lagen können aus dem gleichen Material oder aus zwei oder mehr unterschiedlichen Materialien bestehen.

Beispiele für geeignete Trägermaterialien sind Vliese, Non-wovens oder Gewebe aus natürlichen oder synthetischen organischen oder anorganischen Fasern, insbesondere in Form von Bahnen solcher Materialien. Ein bevorzugtes Beispiel für ein Trägermaterial ist Papier, z.B. in Form einer Papierbahn.

Als härtbares Kunstharz, mit dem die Lagen des Trägermaterials imprägniert sind, können Kunstharze zum Einsatz kommen, die für die Anwendung in Schichtpressstoffplatten bekannt sind, wie Phenol-Formaldehyd-Harz (PF-Harz), Melamin-Formaldehydharz (MF-Harz), Harnstoff-Formaldehyd-Harz (UF-Harz) oder Mischharze daraus, Epoxidharze, Polyesterharze, Thermoplaste oder Elastomere. Bevorzugt werden als härtbare Kunstharze Phenol-Formaldehyd-Harz (PF-Harz), Melamin-Formaldehydharz (MF-Harz), Harnstoff-Formaldehyd-Harz (UF-Harz) oder Mischharze daraus eingesetzt.

Das Material zum Bilden einer Kernlage einer Schichtpressstoffplatte umfasst eine oder mehrere, bevorzugt mehrere Lagen des mit härtbarem Kunstharz imprägnierten Trägermaterials. Bevorzugt liegt die Zahl der Lagen im Bereich von 1 bis 200, insbesondere 2 bis 120.

Nach dem Bereitstellen des Pressstapels in Schritt e) wird der Stapel in Schritt f) bei erhöhtem Druck und einer Temperatur oberhalb der Vernetzungstemperatur verpresst, bei der das beschichtete Oberflächenmaterial in Schritt d) vernetzt wurde. Die Temperatur ist ausreichend hoch gewählt, dass eine Polymerisation der (meth)acrylischen Doppelbindungen in der vernetzten Beschichtung stattfindet. So wird eine Schichtpressstoffplatte gebildet, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält. Als Oberflächenschicht wird dabei die Polymerschicht bezeichnet, die die äußerste Schicht der Schichtpressstoffplatte darstellt, und die so die Plattenoberfläche bildet.

Der beim Verpressen angewandte Druck liegt in der Regel im Bereich von 50 bis 90 kPa. Die Temperatur liegt in der Regel oberhalb von 130 °C, bevorzugt im Bereich von 135 bis 150 °C. Das Verpressen erfolgt in der Regel über einen Zeitraum von 10 bis 100 Minuten.

Wenn gewünscht, kann das Verpressen in einer Heißpresse durchgeführt werden, die mit einer strukturgebenden Oberfläche versehen ist und die der Schichtpressstoffplatte eine Oberflächenstruktur verleiht.

Auch im Rahmen der weiteren Schritte c) bis f) (oder etwaiger zusätzlicher Schritte) ist eine Strahlungshärtung von enthaltenen Komponenten nicht notwendig, so dass die erfindungsgemäßen Verfahren zur Herstellung einer Schichtpressstoffplatte oder zur Herstellung eines Oberflächenmaterials für eine Schichtpressstoffplatte insgesamt ohne einen Schritt einer Strahlungshärtung auskommen bzw. durchgeführt werden.

Erfindungsgemäß werden damit auch ein Oberflächenmaterial für eine Schichtpressstoffplatte sowie eine Schichtpresssstoffplatte bereit gestellt. Vorzugsweise werden das Oberflächenmaterial für eine Schichtpressstoffplatte sowie die Schichtpresssstoffplatte mit Hilfe der vorstehend beschriebenen erfindungsgemäßen Verfahren einschließlich ihrer bevorzugten Ausführungsformen hergestellt bzw. sind bevorzugt mit Hilfe dieser Verfahren erhältlich.

Die erfindungsgemäße Schichtpressstoffplatte umfasst eine Kernlage und eine Oberflächenlage mit einer mehrschichtigen Polymerbeschichtung an mindestens einer Plattenoberfläche, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält. Wie dem Fachmann geläufig, wird hier als Polyurethan(meth)acrylat-Polymer ein Polymer bezeichnet, dessen Struktur innerhalb derselben Polymermoleküle sowohl Urethanbindungen als auch polymerisierte methacrylische oder acrylische Doppelbindungen aufweist. Soweit nicht im Einzelfall anders angegeben, wird daher als Polyurethan-Polymer demgemäß ein Polymer bezeichnet, dessen Struktur Urethanbindungen aufweist, jedoch frei ist von polymerisierten methacrylischen oder acrylischen Doppelbindungen.

In Bezug auf Materialien für ein Oberflächenmaterial, das zusammen mit der mehrschichtigen Polymerbeschichtung die Oberflächenlage bildet, wird auf die vorstehende Beschreibung von geeigneten Oberflächenmaterialien für Schichtpressstoffplatten im Zusammenhang mit Schritt a) der erfindungsgemäßen Verfahren verwiesen. Auf die dort genannten Materialien ist die mehrschichtige Polymerbeschichtung vorzugsweise aufgebracht. Wie dort erwähnt, handelt es sich bei dem Oberflächenmaterial insbesondere bevorzugt um eine mit einem härtbaren Kunstharz imprägniert Papierbahn, wobei das Kunstharz in der Oberflächenlage der Schichtpressstoffplatte in gehärteter Form vorliegt.

In Bezug auf Materialien für die Kernlage wird auf die vorstehende Beschreibung von geeigneten Materialien zum Bilden einer Kernlage für Schichtpressstoffplatten im Zusammenhang mit Schritt e) des erfindungsgemäßen Verfahrens zur Herstellung einer Schichtpressstoffplatte verwiesen. Die dort genannten Materialien bilden vorzugsweise die Kernlage der erfindungsgemäßen Platte. Wie dort erwähnt, handelt es sich bei dem Material für eine Kernlage insbesondere bevorzugt um eine mit einem härtbaren Kunstharz imprägnierte Papierbahn, wobei das Kunstharz in der Kernlage der Schichtpressstoffplatte in gehärteter Form vorliegt.

Bei der mehrschichtigen Polymerbeschichtung in der Oberflächenschicht der erfindungsgemäßen Schichtpressstoffplatte handelt es sich vorzugsweise um eine Polymerbeschichtung mit genau zwei Schichten, die auf dem Oberflächenmaterial aufgebracht ist und in ihrer Oberflächenschicht ein Polyurethan(meth)acrylat-Polymer enthält, und in der darunter angrenzenden Schicht ein Polyurethan-Polymer enthält. Wie vorstehend erläutert wird als Oberflächenschicht die Polymerschicht bezeichnet, die die äußerste Schicht der Schichtpressstoffplatte darstellt, und die so die Plattenoberfläche bildet. Bei der mehrschichtigen Polymerbeschichtung kann es sich aber auch um eine Polymerbeschichtung mit drei oder mehr Schichten handeln, die in ihrer Oberflächenschicht ein Polyurethan(meth)acrylat-Polymer enthält und die sowohl in der darunter angrenzenden Schicht als auch in einer oder mehreren zusätzlich darunter folgenden Schichten (d.h. unter der Schicht, die unter der Oberflächenschicht angrenzt) ein Polyurethan-Polymer enthält.

Die Schicht, die das Polyurethan-Polymer enthält, eignet sich in hervorragender Weise zur Aufnahme von Zusatzstoffen, die die Oberflächeneigenschaften, beispielsweise die physikalische Funktionalität oder das Erscheinungsbild, der Schichtpressstoffplatte in gewünschter Weise beeinflussen. Daher kann die Schicht, die das Polyurethan-Polymer enthält, zusätzlich einen solchen Zusatzstoff enthalten. Als Beispiele können hier funktionelle Zusatzstoffe, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, oder Flüssigkristallpigmente, Farbpigmente, oder optische Effektpigmente wie z.B. Metallic-, Flipflop-, changierende-, oder Perlmuttpigmente, genannt werden. Im Fall einer Polymerbeschichtung mit drei oder mehr Schichten kann mindestens eine der Schichten, die ein Polyurethan-Polymer enthalten, einen solchen Zusatzstoff enthalten.

Die mehrschichtige Polymerbeschichtung enthält in ihrer Oberflächenschicht ein Polyurethan(meth)acrylat-Polymer, und in der darunter angrenzenden Schicht (oder den optionalen weiteren Polymerschichten, die sich darunter befinden können) ein Polyurethan-Polymer.

Wie für den Fachmann verständlich sein wird, ist ein Polyurethan(meth)acrylat-Polymer durch Reaktion von Hydroxygruppen mit Isocyanatgruppen im Ausgangsmaterial, sowie durch Polymerisation von (meth)acrylischen Doppelbindungen im Ausgangsmaterial erhältlich. In Bezug auf die bevorzugte Zusammensetzung des Polyurethan(methacrylat)-Polymers wird auf die vorstehende Beschreibung von geeigneten Beschichtungssystemen BS-2 verwiesen. Das Polyurethan(methacrylat)-Polymer wird bevorzugt aus der dort genannten Harzkomponente BSR-2 und der dort genannten Härterkomponente BSC-2 gebildet. Besonders bevorzugt ist daher ein Polyurethan(meth)acrylat-Polymer, das erhältlich ist durch Reaktion der folgenden Komponenten A bis D und einer Härterkomponente, die einen Isocyanathärter umfasst, wobei
Komponente A eine polymerisierbare (Meth)acrylatverbindung ist, die pro Molekül mindestens 2 Gruppen mit einer (meth)acrylischen Doppelbindung und keine Hydroxygruppen aufweist;
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
Komponente C ein Polyurethan-Präpolymer ist, das pro Molekül mindestens 2 Hydroxygruppen und keine Isocyanatgruppen aufweist; und
Komponente D ein Harz mit einem Aminoplast-Grundgerüst ist, das pro Molekül mindestens 2 Hydroxygruppen aufweist.

Das Polyurethan-Polymer kann beispielsweise Untereinheiten enthalten, die durch Polymerisation eines Polyesterpolyols, bevorzugt eines verzweigten Polyesterpolyols, erhältlich sind. In Bezug auf die bevorzugte Zusammensetzung des Polyurethan-Polymers wird auf die vorstehende Beschreibung von geeigneten Beschichtungssystemen BS-1 verwiesen. Das Polyurethan-Polymer wird bevorzugt aus der dort genannten Harzkomponente BSR-1 und der dort genannten Härterkomponente BSC-1 gebildet. Auch in diesem Zusammenhang wird als Polyurethan-Polymer ein Polymer bezeichnet, dessen Struktur Urethanbindungen aufweist, jedoch frei ist von polymerisierten methacrylischen oder acrylischen Doppelbindungen.

Die polymerbeschichtete Oberflächenlage verleiht der Schichtpressstoffplatte hohe Kratzfestigkeit, und ihr Glanzgrad verändert sich während der Bewitterung nur geringfügig. Die Oberfläche der Platte ist bevorzugt chemikalienbeständig mit Grad ≥ 4, d.h. insbesondere 4 oder 5, gemessen nach EN 438-2.26:2016, und kann daher leicht von Graffitis und anderen Verschmutzungen gereinigt werden. Darüber hinaus weist die polymerbeschichtete Oberflächenlage bevorzugt eine Kratzfestigkeit von ≥ 6N, gemessen nach EN 438-2.25:2016, und eine Änderung des Glanzgrades nach einer Bewitterung von 3500h nach dem Verfahren EN 438-2.29:2016, gemessen nach EN ISO 2813 bei einem Winkel von 85°, von nicht mehr als 5 units, insbesondere bevorzugt nicht mehr als 3, auf. Weiter ist bevorzugt, dass die Änderung des Glanzgrades, gemessen unter den gleichen Bedingungen, nicht mehr als 20% gegenüber dem Ausgangswert vor Bewitterung als 100% beträgt.

In der erfindungsgemäß bereit gestellten polymerbeschichteten Oberflächenlage einer Schichtpressstoffplatte verbleiben typischerweise noch Reste an nicht polymerisierten (meth)acrylischen Doppelbindungen verbleibenden -C=C- Gruppen. Diese Gruppen können in der Polymerbeschichtung der Oberflächenlage mittels IR Spektroskopie nachgewiesen werden.

Auch ein Einsatz blockierter Isocyanathärter bei der Herstellung einer erfindungsgemäß bereit gestellten polymerbeschichteten Oberflächenlage kann durch das Vorliegen charakteristischer Gruppen nachgewiesen werden. Beispielsweise treten bei Verwendung von mit Methylethylketoxim blockierten Isocanatgruppen C=N-OH Gruppen in der Polymerbeschichtung der Oberflächenlage auf, die mittels FTIR Spektroskopie nachgewiesen werden können.

Ein polymerbeschichtetes Oberflächenmaterial zur Herstellung einer Schichtpressstoffplatte kann bequem transportiert, gelagert und weiterverarbeitet werden, und stellt daher ein wertvolles Zwischenprodukt bei der Herstellung von Schichtpressstoffplatten dar. Insofern wird als weiterer Aspekt der Erfindung ein Oberflächenmaterial für eine Schichtpressstoffplatte mit einer mehrschichtigen Beschichtung auf einer Seite des Oberflächenmaterials bereit gestellt, wobei die mehrschichtige Beschichtung in ihrer Oberflächenschicht ein Polyurethan-Polymer enthält, das Gruppen mit einer (meth)acrylischen Doppelbindung aufweist, und in der darunter angrenzenden Schicht ein Polyurethan-Polymer enthält. In der Oberflächenschicht des erfindungsgemäßen Oberflächenmaterials liegen daher zur Polymerisation geeignete aber nicht polymerisierte (meth)acrylische Doppelbindungen vor. Die Polymerisation dieser Doppelbindungen erfolgt geeigneterweise im Rahmen des Pressvorgangs bei der Herstellung einer Schichtpressstoffplatte. Das Polyurethan-Polymer, das sich in der unter der Oberflächenschicht angrenzenden Schicht befindet, enthält dagegen keine methacrylischen oder acrylischen Doppelbindungen.

In Bezug auf Materialien für ein Oberflächenmaterial, das die mehrschichtige Polymerbeschichtung trägt, wird auf die vorstehende Beschreibung von geeigneten Oberflächenmaterialien für Schichtpressstoffplatten im Zusammenhang mit Schritt a) der erfindungsgemäßen Verfahren verwiesen. Auf die dort genannten Materialien ist die mehrschichtige Polymerbeschichtung vorzugsweise aufgebracht. Wie dort erwähnt, handelt es sich bei dem Oberflächenmaterial insbesondere bevorzugt um eine mit einem härtbaren Kunstharz imprägnierte Papierbahn, wobei das Kunstharz in der Oberflächenlage der Schichtpressstoffplatte in gehärteter Form vorliegt.

Bei der mehrschichtigen Polymerbeschichtung auf dem erfindungsgemäßen Oberflächenmaterial handelt es sich vorzugsweise um eine Polymerbeschichtung mit genau zwei Schichten, die auf dem Oberflächenmaterial aufgebracht ist und in ihrer Oberflächenschicht ein Polyurethan-Polymer enthält, das Gruppen mit einer (meth)acrylischen Doppelbindung aufweist, und in der darunter angrenzenden Schicht ein Polyurethan-Polymer enthält. Bei der mehrschichtigen Polymerbeschichtung kann es sich aber auch um eine Polymerbeschichtung mit drei oder mehr Schichten handeln, die in ihrer Oberflächenschicht ein Polyurethan-Polymer enthält, das Gruppen mit einer (meth)acrylischen Doppelbindung aufweist, und die sowohl in der darunter angrenzenden Schicht als auch in einer oder mehreren zusätzlich darunter folgenden Schichten (d.h. unter der Schicht, die unter der Oberflächenschicht angrenzt) ein Polyurethan-Polymer enthält.

Die Schicht, die das Polyurethan-Polymer enthält, eignet sich in hervorragender Weise zur Aufnahme von Zusatzstoffen, die die Oberflächeneigenschaften, beispielsweise das Erscheinungsbild, einer Schichtpressstoffplatte in gewünschter Weise beeinflussen. Daher kann die Schicht, die das Polyurethan-Polymer enthält, zusätzlich einen solchen Zusatzstoff enthalten. Als Beispiele können hier funktionelle Zusatzstoffe, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, oder Flüssigkristallpigmente, Farbpigmente, oder optische Effektpigmente wie z.B. Metallic-, Flipflop-, changierende-, oder Perlmuttpigmente, genannt werden. Im Fall einer Polymerbeschichtung mit drei oder mehr Schichten kann mindestens eine der Schichten, die ein Polyurethan-Polymer enthalten, einen solchen Zusatzstoff enthalten.

Die mehrschichtige Polymerbeschichtung enthält in ihrer Oberflächenschicht ein Polyurethan-Polymer, das Gruppen mit einer (meth)acrylischen Doppelbindung aufweist, und in der darunter angrenzenden Schicht (oder den optionalen weiteren Polymerschichten, die sich darunter befinden können) ein Polyurethan-Polymer.

In Bezug auf die bevorzugte Zusammensetzung des Polyurethan-Polymers, das Gruppen mit einer (meth)acrylischen Doppelbindung aufweist, wird auf die vorstehende Beschreibung von geeigneten Beschichtungssystemen BS-2 verwiesen. Das Polyurethan-Polymer, das Gruppen mit einer (meth)acrylischen Doppelbindung aufweist wird bevorzugt aus der dort genannten Harzkomponente BSR-2 und der dort genannten Härterkomponente BSC-2 gebildet. Besonders bevorzugt ist daher ein Polyurethan(meth)acrylat-Polymer, das erhältlich ist durch Reaktion der folgenden Komponenten A bis D und einer Härterkomponente, die einen Isocyanathärter umfasst, wobei
Komponente A eine polymerisierbare (Meth)acrylatverbindung ist, die pro Molekül mindestens 2 Gruppen mit einer (meth)acrylischen Doppelbindung und keine Hydroxygruppen aufweist;
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
Komponente C ein Polyurethan-Präpolymer ist, das pro Molekül mindestens 2 Hydroxygruppen und keine Isocyanatgruppen aufweist; und
Komponente D ein Harz mit einem Aminoplast-Grundgerüst ist, das pro Molekül mindestens 2 Hydroxygruppen aufweist.

Das Polyurethan-Polymer in der unter der Oberflächenschicht angrenzenden Schicht (oder weiteren darunter liegenden Schichten) kann beispielsweise Untereinheiten enthalten, die durch Polymerisation eines Polyesterpolyols, bevorzugt eines verzweigten Polyesterpolyols erhältlich sind. In Bezug auf die bevorzugte Zusammensetzung des Polyurethan-Polymers wird auf die vorstehende Beschreibung von geeigneten Beschichtungssystemen BS-1 verwiesen. Das Polyurethan-Polymer wird bevorzugt aus der dort genannten Harzkomponente BSR-1 und der dort genannten Härterkomponente BSC-1 gebildet. Auch in diesem Zusammenhang wird als Polyurethan-Polymer ein Polymer bezeichnet, dessen Struktur Urethanbindungen aufweist, jedoch frei ist von polymerisierten methacrylischen oder acrylischen Doppelbindungen.

Wesentliche Aspekte der Erfindung sind in den folgenden Punkten zusammengefasst:
1. Verfahren zur Herstellung einer Schichtpressstoffplatte mit einer mehrschichtigen Polymerbeschichtung an mindestens einer Plattenoberfläche, wobei das Verfahren die folgenden Schritte umfasst:
   a) Auftragen eines Beschichtungssystems BS-1 als Beschichtung auf ein Oberflächenmaterial für eine Schichtpressstoffplatte, wobei das Beschichtungssystem BS-1 eine Harzkomponente BSR-1 und eine Härterkomponente BSC-1 umfasst, und wobei in der Harzkomponente BSR-1 ein Polyolharz enthalten ist und in der Härterkomponente BSC-1 ein Isocyanathärter enthalten ist,
   b) Vernetzen des in Schritt a) beschichteten Oberflächenmaterials bei einer erhöhten Temperatur, bei der eine Reaktion von Hydroxygruppen der Harzkomponente BSR-1 und Isocyanatgruppen der Härterkomponente BSC-1 stattfindet, so dass in der Beschichtung ein Polyurethan-Polymer gebildet wird;
   c) Auftragen eines weiteren Beschichtungssystems BS-2 als Beschichtung auf die in Schritt b) bereit gestellte Beschichtung auf dem Oberflächenmaterial, wobei das Beschichtungssystem BS-2 eine Harzkomponente BSR-2 und eine Härterkomponente BSC-2 umfasst, und wobei in der Harzkomponente BSR-2 sowohl Hydroxygruppen als auch Gruppen mit einer (meth)acrylischen Doppelbindung enthalten sind, und in der Härterkomponente BSC-2 ein Isocyanathärter enthalten ist;
   d) Vernetzen des in Schritt c) beschichteten Oberflächenmaterials bei einer erhöhten Temperatur, bei der eine Reaktion von Hydroxygruppen der Harzkomponente BSR-2 mit Isocyanatgruppen der Härterkomponente BSC-2 stattfindet, so dass in der Beschichtung ein Polyurethan-Polymer gebildet wird, das Gruppen mit einer (meth)acrylischen Doppelbindung aufweist;
   e) Bereitstellen eines Pressstapels, der ein Material zum Bilden einer Kernlage einer Schichtpressstoffplatte, das eine oder mehrere, bevorzugt mehrere, Lagen eines mit härtbarem Kunstharz imprägnierten Trägermaterials umfasst, und der das in Schritt d) erhaltene beschichtete Oberflächenmaterial als Oberflächenlage enthält, so dass zumindest auf einer Seite des Pressstapels das in Schritt d) erhaltene beschichtete Oberflächenmaterial die äußerste Lage bildet und die vernetzte Beschichtung auf mindestens einer Oberfläche des Pressstapels vorliegt;
   f) Verpressen des Pressstapels bei erhöhtem Druck und einer Temperatur oberhalb der Vernetzungstemperatur des Schritts d), so dass eine Polymerisation der (meth)acrylischen Doppelbindungen in der vernetzten Beschichtung stattfindet und eine Schichtpressstoffplatte gebildet wird, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält.
2. Verfahren zur Herstellung eines Oberflächenmaterials für eine Schichtpressstoffplatte mit einer mehrschichtigen Beschichtung auf einer Seite des Oberflächenmaterials, umfassend die Schritte:
   a) Auftragen eines Beschichtungssystems BS-1 als Beschichtung auf ein Oberflächenmaterial für eine Schichtpressstoffplatte, wobei das erste Beschichtungssystem eine Harzkomponente BSR-1 und eine Härterkomponente BSC-1 umfasst, und wobei in der Harzkomponente BSR-1 ein Polyolharz enthalten ist und in der Härterkomponente BSC-1 ein Isocyanathärter enthalten ist,
   b) Vernetzen des in Schritt a) beschichteten Oberflächenmaterials bei einer erhöhten Temperatur, bei der eine Reaktion von Hydroxygruppen der Harzkomponente BSR-1 und Isocyanatgruppen der Härterkomponente BSC-1 stattfindet, so dass in der ersten Beschichtung ein Polyurethan-Polymer gebildet wird;
   c) Auftragen eines weiteren Beschichtungssystems BS-2 als Beschichtung auf die in Schritt b) bereit gestellte Beschichtung auf dem Oberflächematerial, wobei das Beschichtungssystem BS-2 eine Harzkomponente BSR-2 und eine Härterkomponente BSC-2 umfasst, und wobei in der Harzkomponente BSR-2 sowohl Hydroxygruppen als auch Gruppen mit einer (meth)acrylischen Doppelbindung enthalten sind, und in der Härterkomponente BSC-2 ein Isocyanathärter enthalten ist;
   d) Vernetzen des in Schritt c) beschichteten Oberflächenmaterials bei einer erhöhten Temperatur, bei der eine Reaktion von Hydroxygruppen der Harzkomponente BSR-2 mit Isocyanatgruppen der Härterkomponente BSC-2 stattfindet, so dass in der Beschichtung ein Polyurethan-Polymer gebildet wird, das Gruppen mit einer (meth)acrylischen Doppelbindung aufweist, und eine mehrschichtige Beschichtung auf einer Seite des Oberflächenmaterials bereitgestellt wird, die in ihrer Oberflächenschicht das Polyurethan-Polymer enthält, das Gruppen mit einer (meth)acrylischen Doppelbindung aufweist, und in der darunter angrenzenden Schicht ein Polyurethan-Polymer enthält.
3. Verfahren gemäß Punkt 1 oder 2, wobei es sich bei den Gruppen mit einer methacrylischen Doppelbindung um Acrylestergruppen handelt.
4. Verfahren gemäß einem der Punkte 1 bis 3, wobei in der Harzkomponente BSR-2 ein Polyolharz sowie eine Polyolverbindung enthalten ist, die neben Hydroxygruppen auch Gruppen mit einer (meth)acrylischen Doppelbindung aufweist.
5. Verfahren gemäß einem der Punkte 1 bis 4, wobei die Harzkomponente BSR-2 im Beschichtungssystem BS-2 als Gemisch aus den Komponenten A bis D vorliegt, in dem
   Komponente A eine polymerisierbare (Meth)acrylatverbindung ist, die pro Molekül mindestens 2 Gruppen mit einer (meth)acrylischen Doppelbindung und keine Hydroxygruppen aufweist;
   Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
   Komponente C ein Polyurethan-Präpolymer ist, das pro Molekül mindestens 2 Hydroxygruppen und keine Isocyanatgruppen aufweist; und
   Komponente D ein Harz mit einem Aminoplast-Grundgerüst ist, das pro Molekül mindestens 2 Hydroxygruppen aufweist.
6. Verfahren gemäß Punkt 5, wobei es sich bei den Gruppen mit einer (meth)acrylischen Doppelbindung der Verbindung der Komponente A um Acrylestergruppen handelt.
7. Verfahren gemäß einem der Punkte 5 oder 6, wobei die Zahl der Gruppen mit einer (meth)acrylischen Doppelbindung pro Molekül der Verbindung der Komponente A 2 bis 18, bevorzugt 2 bis 10, und stärker bevorzugt 4 bis 8 beträgt.
8. Verfahren gemäß einem der Punkte 5 bis 7, wobei die Verbindung der Komponente A neben den Gruppen mit einer (meth)acrylischen Doppelbindung keine weiteren reaktiven Gruppen aufweist.
9. Verfahren gemäß einem der Punkte 5 bis 8, wobei die (Meth)acrylatverbindung der Komponente A eine Verbindung der folgenden Formel (A1) umfasst:

   [H₂C=CH-C(O)-O-]ₘR¹-O-C(O)-NH-R²-NH-C(O)-O-R³[-O-C(O)-CH=CH₂]ₙ (A1);

   worin R¹ und R³ unabhängig voneinander ausgewählt sind aus einer aliphatischen Kohlenwasserstoffgruppe, einer aliphatischen Polyethergruppe und einer aliphatischen Polyestergruppe, R² eine aliphatische oder cycloaliphatische Kohlenwasserstoffgruppe ist, n = 2-9, bevorzugt 2-4 und m = 2-9, bevorzugt 2-4 ist.
10. Verfahren gemäß einem der Punkte 5 bis 9, wobei die (Meth)acrylatverbindung der Komponente A eine Verbindung der folgenden Formel (A2) umfasst:

   [H₂C=CH-C(O)-O-]ₒR⁴ (A2)

   worin R⁴ eine aliphatische Kohlenwasserstoffgruppe ist, und o = 2-6, bevorzugt 3-5 ist.
11. Verfahren gemäß einem der Punkte 5 bis 10, wobei es sich bei den Gruppen mit einer (meth)acrylischen Doppelbindung der Verbindung der Komponente B um Acrylestergruppen handelt.
12. Verfahren gemäß einem der Punkte 5 bis 11, wobei die Zahl der Gruppen mit einer (meth)acrylischen Doppelbindung pro Molekül der Verbindung der Komponente B 2 bis 9, bevorzugt 2 bis 4 beträgt.
13. Verfahren gemäß einem der Punkte 5 bis 12, wobei die Zahl der Hydroxygruppen pro Molekül der Verbindung der Komponente B 2 bis 5, bevorzugt 2 beträgt.
14. Verfahren gemäß einem der Punkte 5 bis 13, wobei die (Meth)acrylatverbindung der Komponente B eine Verbindung der folgenden Formel (B1) umfasst:

   [H₂C=CH-C(O)-O-]ₚR⁵-O-C(O)-NH-R⁶-NH-C(O)-O-R⁷(OH)₂ (B1)

   worin R⁵ ausgewählt ist aus einer aliphatischen Kohlenwasserstoffgruppe, einer alphatischen Polyethergruppe und einer aliphatischen Polyestergruppe, R⁶ und R⁷ unabhängig voneinander ein aliphatischer oder cycloaliphatischer Kohlenwasserstoffrest sind und p = 2-9, bevorzugt 2-4 ist.
15. Verfahren gemäß einem der Punkte 5 bis 14, wobei das Polyurethan-Präpolymer der Komponente C neben den Hydroxygruppen keine weiteren reaktiven Gruppen aufweist.
16. Verfahren gemäß einem der Punkte 5 bis 15, wobei das Polyurethan-Präpolymer der Komponente C eine Verbindung der Formel (C1) und/oder eine Verbindung der Formel (C2) umfasst: 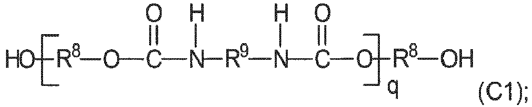 worin R⁸ unabhängig voneinander bei jedem Auftreten ausgewählt ist aus einer aliphatischen Kohlenwasserstoffgruppe, die mit einer oder mehreren Hydroxylgruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist; 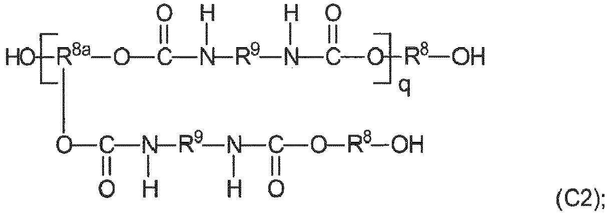 worin R⁸ und R^{8a} unabhängig voneinander bei jedem Auftreten ausgewählt sind aus einer aliphatischen Kohlenwasserstoffgruppe, die mit einer oder mehreren OH-Gruppen substituiert sein kann, einer aliphatischen Polyethergruppe und einer aliphatischen Polyestergruppe, R⁹ unabhängig voneinander bei jedem Auftreten eine aliphatische oder cycloaliphatische Kohlenwasserstoffgruppe ist, und q 2-9 ist.
17. Verfahren gemäß einem der Punkte 5 bis 16, wobei das Harz mit Aminoplast-Grundgerüst der Komponente D ein Harz, bevorzugt ein ausgehärtetes Harz in Form eines Pulvers, mit einem Harnstoff-Formaldehyd-Harzgrundgerüst ist.
18. Verfahren gemäß einem der Punkte 5 bis 17, wobei das Verfahren einen Schritt des Herstellens des zweiten Beschichtungssystems umfasst, wobei nach Zugabe des Harzes mit einem Aminoplast-Grundgerüst D beim Herstellen der Harzkomponente BSR-2 thermisch auf eine Temperatur von 30 bis 130°C erhitzt wird.
19. Verfahren gemäß einem der Punkte 5 bis 18, wobei das Verfahren zusätzlich die Synthese der Harzkomponente BSR-2 umfasst und die Harzkomponente BSR-2 durch eine ein- oder mehrstufige Synthese bei Temperaturen von 30 bis 130°C hergestellt wird.
20. Verfahren gemäß Punkt 19, wobei bei der Synthese der Harzkomponente BSR-2 das Harz mit Aminoplast-Grundgerüst als Komponente D von Beginn der Synthese an eingemischt ist.
21. Verfahren gemäß einem der Punkte 5 bis 20, wobei in der Harzkomponente BSR-2 die Komponente A in einer Menge von 40,0 bis 80,0 Gew.%, die Komponente B in einer Menge von 19,0 bis 55,0 Gew.%, die Komponente C in einer Menge von 0,5 bis 5 Gew.% und die Komponente D in einer Menge von 0,5 bis 7 Gew.%, bezogen auf das Gesamtgewicht der Harzkomponente BSR-2 als 100 Gew.%, vorliegt.
22. Verfahren gemäß einem der Punkte 1 bis 21, wobei die Kombination der Schritte a) und b) genau einmal durchgeführt wird bevor Schritt c) durchgeführt wird.
23. Verfahren gemäß einem der Punkte 1 bis 22, wobei das Beschichtungssystem BS-1 einen Zusatzstoff, ausgewählt aus funktionellen Zusatzstoffen, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, oder Flüssigkristallpigmente, Farbpigmente, oder optische Effektpigmente wie z.B. Metallic-, Flipflop-, changierende-, oder Perlmuttpigmente, enthält.
24. Verfahren gemäß einem der Punkte 1 bis 21, wobei die Kombination der Schritte a) und b) unter Verwendung gleicher oder unterschiedlicher Beschichtungssysteme BS-1 mindestens zweimal durchgeführt wird bevor Schritt c) durchgeführt wird.
25. Verfahren gemäß Punkt 24, wobei mindestens ein Beschichtungssystem BS-1 einen Zusatzstoff, ausgewählt aus funktionellen Zusatzstoffen, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, oder Flüssigkristallpigmente, Farbpigmente, oder optische Effektpigmente wie z.B. Metallic-, Flipflop-, changierende-, oder Perlmuttpigmente, enthält.
26. Verfahren gemäß einem der Punkte 1 bis 25, wobei das Beschichtungssystem BS-1 die Harzkomponente BSR-1 und die Härterkomponente BSC-1 in einer Menge von insgesamt 50 bis 100 Gew.%, stärker bevorzugt 70 bis 100 Gew.%, besonders bevorzugt 80 bis 100 Gew.%, und optionale Zusatzstoffe in einer Menge von insgesamt 0 bis 50 Gew.%, stärker bevorzugt 0 bis 30 Gew.%, besonders bevorzugt 0 bis 20 Gew.%, bezogen auf das Gesamtgewicht des Beschichtungssystems BS-1 als 100 Gew.%, umfasst.
27. Verfahren gemäß einem der Punkte 1 bis 26, wobei das Polyolharz der Harzkomponente BSR-1 ein Polyesterpolyol, bevorzugt ein verzweigtes Polyesterpolyol, enthält.
28. Verfahren gemäß einem der Punkte 1 bis 27, wobei das Polyolharz der Harzkomponente BSR-1 Glycerinesterverbindungen enthält, in denen mindestens zwei, bevorzugt alle drei Hydroxgruppen des Glycerins mit einer Hydroxycarbonsäure verestert sind.
29. Verfahren gemäß einem der Punkte 1 bis 28, wobei die Härterkomponente BSC-1 blockierte Isocyanatgruppen enthält.
30. Verfahren gemäß einem der Punkte 1 bis 28, wobei die Härterkomponente BSC-1 sowohl blockierte als auch freie Isocyanatgruppen enthält, und wobei stärker bevorzugt die Härterkomponente mindestens 5 % blockierte Isocyanatgruppen, ausgedrückt als die relative Anzahl der blockierten Isocyanatgruppen, bezogen auf die Anzahl aller blockierten und freien Isocyanatgruppen in der Härterkomponente, enthält.
31. Verfahren gemäß einem der Punkte 1 bis 30, wobei der Isocyanathärter der Härterkomponente BSC-1 eine Anzahl von 2 bis 4 Isocyanatgruppen pro Molekül enthält.
32. Verfahren gemäß einem der Punkte 1 bis 31, wobei die Harzkomponente BSR-1 und die Härterkomponente BSC-1 im Beschichtungssystem BS-1 in einer relativen Menge vorliegen, bei der sich ein äquivalentes Verhältnis von Hydroxygruppen in der Harzkomponente zu Isocyanatgruppen in der Härterkomponente ergibt.
33. Verfahren gemäß einem der Punkte 1 bis 32, wobei der Isocyanathärter der Härterkomponente BSC-2 eine Anzahl von 2 bis 4 Isocyanatgruppen pro Molekül enthält.
34. Verfahren gemäß einem der Punkte 1 bis 33, wobei die Harzkomponente BSR-2 und die Härterkomponente BSC-2 im Beschichtungssystem BS-2 in einer relativen Menge vorliegen, bei der sich ein Überschuss der Isocyanatgruppen in der Härterkomponente gegenüber den Hydroxygruppen in der Harzkomponente ergibt.
35. Verfahren gemäß einem der Punkte 1 bis 34, wobei das Beschichtungssystem BS-2 als Zusatzstoff einen Polymerisationsstarter enthält.
36. Verfahren gemäß einem der Punkte 1 bis 35, wobei das Beschichtungssystem BS-2 die Harzkomponente BSR-2 und die Härterkomponente BSC-2 in einer Menge von insgesamt 90 bis 100 Gew.% , und optionale Zusatzstoffe in einer Menge von insgesamt 0 bis 10 Gew.%, bezogen auf das Gesamtgewicht der Beschichtungssystems als 100 Gew.%, umfasst.
37. Verfahren nach einem der Punkte 1 bis 36, wobei das in Schritt a) eingesetzte Oberflächenmaterial für eine Schichtpressstoffplatte eine mit einem härtbaren Kunstharz imprägnierte Papierbahn umfasst.
38. Verfahren nach einem der Punkte 1 bis 37, wobei das Vernetzen in Schritt b) bei einer Temperatur von 130 °C oder weniger, stärker bevorzugt bei einer Temperatur von 100 bis 130 °C durchgeführt wird.
39. Verfahren nach einem der Punkte 1 bis 38, wobei das Vernetzen in Schritt d) bei einer Temperatur von 130 °C oder weniger, stärker bevorzugt bei einer Temperatur von 100 bis 130 °C, durchgeführt wird.
40. Verfahren nach einem der Punkte 1 und 3 bis 39, wobei das in Schritt e) eingesetzte, mit härtbarem Kunstharz imprägnierte Trägermaterial eine mit härtbarem Kunstharz imprägnierte Papierbahn ist.
41. Verfahren nach einem der Punkte 1 und 3 bis 40, wobei die Temperatur zur Polymerisation der (meth)acrylischen Doppelbindungen in Schritt f) oberhalb von 130 °C liegt.
42. Verfahren gemäß einem der Punkte 1 oder 3 bis 40, wobei Schritt f) in einer Heißpresse durchgeführt wird, die mit einer strukturgebenden Oberfläche versehen ist und die der Schichtpressstoffplatte eine Oberflächenstruktur verleiht.
43. Schichtpressstoffplatte, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält.
44. Schichtpressstoffplatte gemäß Punkt 43, wobei die Oberflächenlage mit einer mehrschichtigen Polymerbeschichtung eine Kratzfestigkeit von ≥ 6N, gemessen nach EN 438-2.25, eine Änderung des Glanzgrades nach einer Bewitterung von 3500h nach dem Verfahren EN 438-2.29, gemessen nach EN ISO 2813 bei einem Winkel von 85°, von nicht mehr als 5 units, aufweist, und chemikalienbeständig mit Grad ≥ 4 gemessen nach EN 438-2.26:2016 ist.
45. Schichtpressstoffplatte gemäß Punkt 43 oder 44, die erhältlich ist durch das Verfahren gemäß einem der Punkte 1 und 3 bis 43.
46. Schichtpressstoffplatte gemäß einem der Punkte 43 bis 45, wobei das Polyurethan(meth)acrylat-Polymer erhältlich ist durch Reaktion der Komponenten A bis D und einer Härterkomponente, die einen Isocyanathärter umfasst, wobei
   Komponente A eine polymerisierbare (Meth)acrylatverbindung ist, die pro Molekül mindestens 2 Gruppen mit einer (meth)acrylischen Doppelbindung und keine Hydroxygruppen aufweist;
   Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
   Komponente C ein Polyurethan-Präpolymer ist, das pro Molekül mindestens 2 Hydroxygruppen und keine Isocyanatgruppen aufweist; und
   Komponente D ein Harz mit einem Aminoplast-Grundgerüst ist, das pro Molekül mindestens 2 Hydroxygruppen aufweist.
47. Schichtpressstoffplatte gemäß einem der Punkte 43 bis 46, wobei es sich bei der Oberflächenlage mit einer mehrschichtigen Polymerbeschichtung an mindestens einer Plattenoberfläche um eine Polymerbeschichtung mit genau zwei Schichten handelt, die in ihrer Oberflächenschicht ein Polyurethan(meth)acrylat-Polymer enthält, und in der darunter angrenzenden Schicht ein Polyurethan-Polymer enthält.
48. Schichtpressstoffplatte gemäß einem der Punkte 43 bis 47, wobei die Schicht, die das Polyurethan-Polymer enthält, zusätzlich einen Zusatzstoff, ausgewählt aus funktionellen Zusatzstoffen, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, Flüssigkristallpigmenten, Farbpigmenten, und optischen Effektpigmenten, wie z.B. Metallic-, Flipflop-, changierende-, oder Perlmuttpigmente, enthält.
49. Schichtpressstoffplatte gemäß einem der Punkte 43 bis 46, wobei es sich bei der Oberflächenlage mit einer mehrschichtigen Polymerbeschichtung an mindestens einer Plattenoberfläche um eine Polymerbeschichtung mit drei oder mehr Schichten handelt, die in ihrer Oberflächenschicht ein Polyurethan(meth)acrylat-Polymer enthält, und in der darunter angrenzenden Schicht und einer oder mehreren darunter folgenden Schichten ein Polyurethan-Polymer enthält.
50. Schichtpressstoffplatte gemäß Punkt 49, wobei mindestens eine der Schichten, die ein Polyurethan-Polymer enthalten, zusätzlich einen Zusatzstoff, ausgewählt aus funktionellen Zusatzstoffen, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, Flüssigkristallpigmenten, Farbpigmenten, und optischen Effektpigmenten, wie z.B. Metallic-, Flipflop-, changierende-, oder Perlmuttpigmente, enthält.
51. Oberflächenmaterial für eine Schichtpressstoffplatte mit einer mehrschichtigen Polymerbeschichtung auf einer Seite des Oberflächenmaterials, wobei die mehrschichtige Polymerbeschichtung in ihrer Oberflächenschicht ein Polyurethan-Polymer enthält, das Gruppen mit einer (meth)acrylischen Doppelbindung aufweist, und in der darunter angrenzenden Schicht ein Polyurethan-Polymer enthält.
52. Oberflächenmaterial gemäß Punkt 51, wobei die Schicht, die das Polyurethan-Polymer enthält, zusätzlich einen Zusatzstoff, ausgewählt aus funktionellen Zusatzstoffen, wie beispielsweise elektrisch leitfähige, elektromagnetisch abschirmende, magnetisch abschirmende, strahlenabschirmende oder lumineszierende Zusatzstoffe, wie z.B. Photolumineszenz-, Elektrolumineszenz- oder Radiolumineszenzzusatzstoffe, Flüssigkristallpigmenten, Farbpigmenten, und optischen Effektpigmenten, wie z.B. Metallic-, Flipflop-, changierende-, oder Perlmuttpigmente, enthält.
53. Oberflächenmaterial für eine Schichtpressstoffplatte gemäß Punkt 51 oder 52, das erhältlich ist durch das Verfahren gemäß einem der Punkte 2 bis 39.

### Beispiele

### Beispiel 1:

### Herstellung BS-1

Zur Herstellung des Beschichtungssystems BS-1 werden in einem Reaktionsgefäß 100 Gewichtsteile einer Mischung der folgenden Komponenten:
- 33,3 Gewichtsteile eines verzweigten Polyesterpolyols mit einer Viskosität von 718 mPas (23°C) und einem OH-Gehalt von 8,4%
- 8,3 Gewichtsteile eines Glycerinesters mit einer Viskosität von 3870 mPas (23°C) und einem OH-Gehalt von 4,5%
- 43,8 Gewichtsteile eines Methylethyl-Ketoxim blockierten Isocyanats ( mit einem gesamt NCO-Gehalt von 12,7%)
- 14,6 Gewichtsteile Pigmentpaste Blauviolett
mit 16,7 Gew.-Teilen einer Härterkomponente in Form eines trimerisierten Hexamethylendiisocyanats mit einem Isocyanat-Äquivalentgewicht von 195 gemischt.

Diesem Beschichtungssystem können ferner die für Beschichtungssysteme bekannten Zusatzstoffe wie Verlaufmittel, Entschäumer, Lichtschutzmittel, Entgasungsmittel zugegeben werden. Die Gebrauchsdauer des Beschichtungssystems liegt bei 1 - 1,5 Stunden.

### Auftrag BS-1

Das Beschichtungssystem BS-1 wird in einer Beschichtungsanlage mittels Auftragswalzen auf eine mit härtbaren Harzen imprägnierte Papierbahn als Oberflächenmaterial für eine Schichtpressstoffplatte aufgebracht. Das Beschichtungssystem wird in einer Dicke von 70+/- 3 g/m² aufgetragen. Anschließend erfolgt im Trockner einer Beschichtungsanlage bei einer Temperatur von 100°C, eine teilweise Vernetzungsreaktion zwischen der Isocyanatgruppen aus der Härterkomponente und den freien Hydroxylgruppen der Harzkomponente unter Ausbildung eines Polyurethans. Die Durchlaufgeschwindigkeit im Trockner wird derart gewählt, dass das beschichtete Trägermaterial als grifffester Film vorliegt, welcher beliebig lange lagerfähig ist.

### BS-2 Herstellung

Zur Herstellung des Beschichtungssystems BS-2 werden in einem Reaktionsgefäß 100 Gewichtsteile einer Mischung der folgenden Komponenten in n-Butylacetat bei einem Gesamtfeststoffgehalt von 70%:
32 Gewichtsteile

   [H₂C=CH-C(O)-O-]ₘR¹-O-C(O)-NH-R²-NH-C(O)-O-R³[-O-C(O)-CH=CH₂]ₙ (A1)

   worin
   R¹ = (-CH₂)₃C-CH₂-
   R² = 3,3,5,5-Tetramethylcyclohexandiyl
   R³ = -CH₂-C(CH₂-)₃
   und n = 3 und m = 3 ist;
32,6 Gewichtsteile

   [H₂C=CH-C(O)-O-]ₒR⁴ (A2)

   worin R⁴= C(CH₂-)₄ und o = 4 ist;
30,1 Gewichtsteile

   [H₂C=CH-C(O)-O-]ₚR⁵-O-C(O)-NH-R⁶-NH-C(O)-O-R⁷(OH)₂ (B1)

   worin
   R⁵ = (-CH₂)₃C-CH₂-
   R⁶ = 3,3,5,5-Tetramethylcyclohexandiyl
   R⁷ = -CH₂- C(CH₂-)₂-CH₃
   und p = 3 ist;
1,9 Gewichtsteile 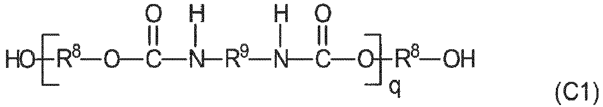 worin
   R⁸ = -CH₂-C(CH₂-CH₃)(CH₂-OH)-(CH₂)-
   R⁹ = 3,3,5,5-Tetramethylcyclohexandiyl
   und q = 3 ist; und 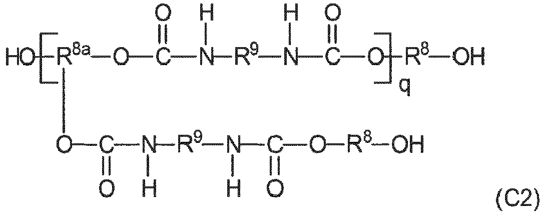
   worin
   R⁸ = -CH₂-C(CH₂-CH₃)(CH₂-OH)-(CH₂)-
   R^{8a}= -CH₂-C(CH₂-CH₃)(CH₂-)-(CH₂)-
   R⁹ = 3,3,5,5-Tetramethylcyclohexandiyl
   und q = 3 ist; und
3,4 Gewichtsteile
   D: ausgehärtetes Harnstoff-Formaldehyd-Harz mit einem Molekulargewicht Mn von > 1000 g/mol]
   mit 28 Gew.-Teilen einer Härterkomponente in Form eines trimerisierten Hexamethylendiisocyanats mit einem Isocyanat-Äquivalentgewicht von 195 gemischt und mit 0,1 Gewichtsteilen tert. Butylperbenzoat als Radikalbildner versetzt. Die Halbwertszeit von tert. Butylperbenzoat beträgt bei 140°C ca. 10 Minuten. Diesem Beschichtungssystem können ferner die für Beschichtungssysteme bekannten Zusatzstoffe wie Verlaufmittel, Entschäumer, Lichtschutzmittel, Entgasungsmittel zugegeben werden. Die Gebrauchsdauer des Beschichtungssystems liegt bei 1 - 1,5 Stunden.

### Auftrag BS-2

Das Beschichtungssystem wird in einer Beschichtungsanlage mittels Auftragswalzen auf die mit dem Beschichtungssystem BS-1 beschichtete mit härtbaren Harzen imprägnierte Papierbahn als Oberflächenmaterial für eine Schichtpressstoffplatte aufgebracht. Das Beschichtungssystem wird in einer Dicke von 80+/-3 g/m² aufgetragen. Anschließend erfolgt im Trockner einer Beschichtungsanlage bei einer Temperatur von 125°C, eine teilweise Vernetzungsreaktion zwischen der Isocyanatgruppe aus der Härterkomponente und den freien Hydroxylgruppen der Harzkomponente unter Ausbildung einer (meth)acrylische Doppelbindungen enthaltenden Harzkomponente. Die Durchlaufgeschwindigkeit im Trockner wird derart gewählt, dass das beschichtete Trägermaterial als grifffester Film vorliegt, welcher beliebig lange lagerfähig ist.

### Plattenherstellung:

Für die Herstellung von Schichtpressstoffplatten mit Polyurethanacrylatoberfläche wird das beschichtete Oberflächenmaterial mit den übrigen Komponenten des Schichtpaketes wie folgt verschlichtet (aufgebaut):
beschichtetes Oberflächenmaterial (Dekorschicht) / Kernschicht bestehend aus etwa 12 mit Phenolharz imprägnierten Papierbahnen / Beschichtetes Oberflächenmaterial (Dekorschicht). Die Polymerbeschichtung des Oberflächematerials liegt jeweils als äußerste Schicht des Pressstapels vor.

Dieser Pressstapel wird mit einem Druck von 80 bar und einer Temperatur von 140°C 20 min. lang verpresst. Bei diesen Reaktionstemperaturen erfolgt die weitere, durch die im Beschichtungssystem vorliegenden Radikalbildner ausgelöste Vernetzungsreaktion der reaktiven (meth)acrylischen Doppelbindungen unter Ausbildung eines ausgehärteten Polyurethanacrylates. Gleichzeitig erfolgt die Aushärtung der in den Dekor- und Kernschichtlagen eingesetzten Imprägnierharze. Nach 20 min. wird der Preßstapel unter Druck rückgekühlt und der Presse entnommen. Die Oberflächeneigenschaften der so erhaltenen Schichtpressstoffplatte sind in der folgenden Tabelle gezeigt.

### Beispiel 2:

Wie Beispiel 1, es wurden jedoch 31,5 Gewichtsteile IPDI Trimer statt 43,8 Gewichtsteilen des Methylethyl-Ketoxim blockierten Isocyanats mit einem gesamt NCO-Gehalt von 12,7% eingesetzt.

### Beispiel 3:

Wie Beispiel 1, es wurden jedoch 15,8 Gewichtsteile IPDI Trimer und 21,9 Gewichtsteile statt 43,8 Gewichtsteile eines Methylethyl-Ketoxim blockierten Isocyanats mit einem gesamt NCO-Gehalt von 12,7% eingesetzt.

### Beispiel 4:

Wie Beispiel 1, aber mit 45,1 Gewichtsteilen eines Dimethylpyrazol (DMP) blockierten Isocyanats mit einem gesamt NCO-Gehalt von 12,3% statt 43,8 Gewichtsteilen Methylethyl-Ketoxim blockierten Isocyanats mit einem gesamt NCO-Gehalt von 12,7%.

### Beispiel 5:

Wie Beispiel 1 aber mit 47,5 Gewichtsteilen eines epsilon-Caprolacton blockierten Isocyanats mit einem gesamt NCO-Gehalt von 11,9% statt 43,8 Gewichtsteilen Methylethyl-Ketoxim blockierten Isocyanats mit einem gesamt NCO-Gehalt von 12,7%.

| | Beispiel 1 | Beispiel 2 | Beispiel 3 | Beispiel 4 | Beispiel 5) |
|---|---|---|---|---|---|
| Beständigkeit gegenüber schnellem Klimawechsel nach EN 438-2.19:2016 Aussehen | Grad 5 | Grad 1 | Grad 3 | Grad 5 | Grad 5 |
| Bewitterung nach EN 438-2.29:2016 | nach | nach | nach | nach | nach |
| | 3500h: | 3500h: | 3500h: | 3500h: | 3500h: |
| | Grauskala 5 | Grauskala 4 | Grauskala 4 | Grauskala 4-5 | Grauskala 4-5 |
| | Aussehen 5 | Aussehen 5 | Aussehen 5 | Aussehen 5 | Aussehen 5 |
| Kratzfestigkeit nach EN 438-2.25:2016 | 7N | 6N | 6N | 7N | 6N |
| Chemikalienbeständigkeit nach EN 438-2.26:2016 | Grad 5 | Grad 5 | Grad 5 | Grad 5 | Grad 5 |

## Patentansprüche

1. Verfahren zur Herstellung einer Schichtpressstoffplatte mit einer mehrschichtigen Polymerbeschichtung an mindestens einer Plattenoberfläche, wobei das Verfahren die folgenden Schritte umfasst:
a) Auftragen eines Beschichtungssystems BS-1 als Beschichtung auf ein Oberflächenmaterial für eine Schichtpressstoffplatte, wobei das Beschichtungssystem BS-1 eine Harzkomponente BSR-1 und eine Härterkomponente BSC-1 umfasst, und wobei in der Harzkomponente BSR-1 ein Polyolharz enthalten ist und in der Härterkomponente BSC-1 ein Isocyanathärter enthalten ist,
b) Vernetzen des in Schritt a) beschichteten Oberflächenmaterials bei einer erhöhten Temperatur, bei der eine Reaktion von Hydroxygruppen der Harzkomponente BSR-1 und Isocyanatgruppen der Härterkomponente BSC-1 stattfindet, so dass in der Beschichtung ein Polyurethan-Polymer gebildet wird;
c) Auftragen eines weiteren Beschichtungssystems BS-2 als Beschichtung auf die in Schritt b) bereit gestellte Beschichtung auf dem Oberflächenmaterial, wobei das Beschichtungssystem BS-2 eine Harzkomponente BSR-2 und eine Härterkomponente BSC-2 umfasst, und wobei in der Harzkomponente BSR-2 sowohl Hydroxygruppen als auch Gruppen mit einer (meth)acrylischen Doppelbindung enthalten sind, und in der Härterkomponente BSC-2 ein Isocyanathärter enthalten ist;
d) Vernetzen des in Schritt c) beschichteten Oberflächenmaterials bei einer erhöhten Temperatur, bei der eine Reaktion von Hydroxygruppen der Harzkomponente BSR-2 mit Isocyanatgruppen der Härterkomponente BSC-2 stattfindet, so dass in der Beschichtung ein Polyurethan-Polymer gebildet wird, das Gruppen mit einer (meth)acrylischen Doppelbindung aufweist;
e) Bereitstellen eines Pressstapels, der ein Material zum Bilden einer Kernlage einer Schichtpressstoffplatte, das eine oder mehrere, bevorzugt mehrere, Lagen eines mit härtbarem Kunstharz imprägnierten Trägermaterials umfasst, und der das in Schritt d) erhaltene beschichtete Oberflächenmaterial als Oberflächenlage enthält, so dass zumindest auf einer Seite des Pressstapels das in Schritt d) erhaltene beschichtete Oberflächenmaterial die äußerste Lage bildet und die vernetzte Beschichtung auf mindestens einer Oberfläche des Pressstapels vorliegt;
f) Verpressen des Pressstapels bei erhöhtem Druck und einer Temperatur oberhalb der Vernetzungstemperatur des Schritts d), so dass eine Polymerisation der (meth)acrylischen Doppelbindungen in der vernetzten Beschichtung stattfindet und eine Schichtpressstoffplatte gebildet wird, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält.

2. Verfahren zur Herstellung eines Oberflächenmaterials für eine Schichtpressstoffplatte mit einer mehrschichtigen Beschichtung auf einer Seite des Oberflächenmaterials, umfassend die Schritte:
a) Auftragen eines Beschichtungssystems BS-1 als Beschichtung auf ein Oberflächenmaterial für eine Schichtpressstoffplatte, wobei das erste Beschichtungssystem eine Harzkomponente BSR-1 und eine Härterkomponente BSC-1 umfasst, und wobei in der Harzkomponente BSR-1 ein Polyolharz enthalten ist und in der Härterkomponente BSC-1 ein Isocyanathärter enthalten ist,
b) Vernetzen des in Schritt a) beschichteten Oberflächenmaterials bei einer erhöhten Temperatur, bei der eine Reaktion von Hydroxygruppen der Harzkomponente BSR-1 und Isocyanatgruppen der Härterkomponente BSC-1 stattfindet, so dass in der ersten Beschichtung ein Polyurethan-Polymer gebildet wird;
c) Auftragen eines weiteren Beschichtungssystems BS-2 als Beschichtung auf die in Schritt b) bereit gestellte Beschichtung auf dem Oberflächematerial, wobei das Beschichtungssystem BS-2 eine Harzkomponente BSR-2 und eine Härterkomponente BSC-2 umfasst, und wobei in der Harzkomponente BSR-2 sowohl Hydroxygruppen als auch Gruppen mit einer (meth)acrylischen Doppelbindung enthalten sind, und in der Härterkomponente BSC-2 ein Isocyanathärter enthalten ist;
d) Vernetzen des in Schritt c) beschichteten Oberflächenmaterials bei einer erhöhten Temperatur, bei der eine Reaktion von Hydroxygruppen der Harzkomponente BSR-2 mit Isocyanatgruppen der Härterkomponente BSC-2 stattfindet, so dass in der Beschichtung ein Polyurethan-Polymer gebildet wird, das Gruppen mit einer (meth)acrylischen Doppelbindung aufweist, und eine mehrschichtige Beschichtung auf einer Seite des Oberflächenmaterials bereit gestellt wird, die in ihrer Oberflächenschicht das Polyurethan-Polymer enthält, das Gruppen mit einer (meth)acrylischen Doppelbindung aufweist, und in der darunter angrenzenden Schicht ein Polyurethan-Polymer enthält.

3. Verfahren gemäß einem der Ansprüche 1 oder 2, wobei in der Harzkomponente BSR-2 ein Polyolharz sowie eine Polyolverbindung enthalten ist, die neben Hydroxygruppen auch Gruppen mit einer (meth)acrylischen Doppelbindung aufweist.

4. Verfahren gemäß einem der Ansprüche 1 bis 3, wobei die Harzkomponente BSR-2 im Beschichtungssystem BS-2 als Gemisch aus den Komponenten A bis D vorliegt, in dem
Komponente A eine polymerisierbare (Meth)acrylatverbindung ist, die pro Molekül mindestens 2 Gruppen mit einer (meth)acrylischen Doppelbindung und keine Hydroxygruppen aufweist;
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
Komponente C ein Polyurethan-Präpolymer ist, das pro Molekül mindestens 2 Hydroxygruppen und keine Isocyanatgruppen aufweist; und
Komponente D ein Harz mit einem Aminoplast-Grundgerüst ist, das pro Molekül mindestens 2 Hydroxygruppen aufweist.

5. Verfahren gemäß einem der Ansprüche 1 bis 4, wobei das Beschichtungssystem BS-1 einen Zusatzstoff, ausgewählt aus funktionellen Zusatzstoffen, Flüssigkristallpigmenten, Farbpigmenten und optischen Effektpigmenten, enthält.

6. Verfahren gemäß einem der Ansprüche 1 bis 5, wobei das Polyolharz der Harzkomponente BSR-1 ein Polyesterpolyol, bevorzugt ein verzweigtes Polyesterpolyol, enthält.

7. Verfahren gemäß einem der Ansprüche 1 bis 6, wobei das Polyolharz der Harzkomponente BSR-1 Glycerinesterverbindungen enthält, in denen mindestens zwei, bevorzugt alle drei Hydroxgruppen des Glycerins mit einer Hydroxycarbonsäure verestert sind.

8. Verfahren nach einem der Ansprüche 1 bis 7, wobei das Vernetzen in Schritt b) bei einer Temperatur von 130 °C oder weniger, stärker bevorzugt bei einer Temperatur von 100 bis 130 °C durchgeführt wird.

9. Verfahren nach einem der Ansprüche 1 bis 8, wobei das Vernetzen in Schritt d) bei einer Temperatur von 130 °C oder weniger, stärker bevorzugt bei einer Temperatur von 100 bis 130 °C, durchgeführt wird.

10. Verfahren nach einem der Ansprüche 1 und 3 bis 9, wobei die Temperatur zur Polymerisation der (meth)acrylischen Doppelbindungen in Schritt f) oberhalb von 130 °C liegt.

11. Schichtpressstoffplatte, die eine Kernlage und eine Oberflächenlage mit einer mehrschichtigen Polymerbeschichtung an mindestens einer Plattenoberfläche umfasst, wobei die mehrschichtige Polymerbeschichtung in ihrer Oberflächenschicht ein Polyurethan(meth)acrylat-Polymer enthält, und in der darunter angrenzenden Schicht ein Polyurethan-Polymer enthält.

12. Schichtpressstoffplatte gemäß Anspruch 11, wobei die Oberflächenlage mit einer mehrschichtigen Polymerbeschichtung eine Kratzfestigkeit von ≥ 6N, gemessen nach EN 438-2.25, eine Änderung des Glanzgrades nach einer Bewitterung von 3500h nach dem Verfahren EN 438-2.29, gemessen nach EN ISO 2813 bei einem Winkel von 85°, von nicht mehr als 5 units, aufweist, und chemikalienbeständig mit Grad ≥ 4 gemessen nach EN 438-2.26:2016 ist.

13. Schichtpressstoffplatte gemäß einem der Ansprüche 11 oder 12, wobei das Polyurethan(meth)acrylat-Polymer erhältlich ist durch Reaktion der Komponenten A bis D und einer Härterkomponente, die einen Isocyanathärter umfasst, wobei
Komponente A eine polymerisierbare (Meth)acrylatverbindung ist, die pro Molekül mindestens 2 Gruppen mit einer (meth)acrylischen Doppelbindung und keine Hydroxygruppen aufweist;
Komponente B eine polymerisierbare (Meth)acrylatverbindung ist, die pro Molekül sowohl eine oder mehrere Gruppen mit einer (meth)acrylischen Doppelbindung als auch mindestens 2 Hydroxygruppen aufweist;
Komponente C ein Polyurethan-Präpolymer ist, das pro Molekül mindestens 2 Hydroxygruppen und keine Isocyanatgruppen aufweist; und
Komponente D ein Harz mit einem Aminoplast-Grundgerüst ist, das pro Molekül mindestens 2 Hydroxygruppen aufweist.

14. Oberflächenmaterial für eine Schichtpressstoffplatte mit einer mehrschichtigen Polymerbeschichtung auf einer Seite des Oberflächenmaterials, wobei die mehrschichtige Polymerbeschichtung in ihrer Oberflächenschicht ein Polyurethan-Polymer enthält, das Gruppen mit einer (meth)acrylischen Doppelbindung aufweist, und in der darunter angrenzenden Schicht ein Polyurethan-Polymer enthält.

15. Oberflächenmaterial für eine Schichtpressstoffplatte gemäß Anspruch 14, das erhältlich ist durch das Verfahren gemäß einem der Ansprüche 2 bis 9.
